# EUROPEAN PATENT SPECIFICATION

(11) **EP 0 846 288 B1**
(45) Date of publication and mention of the grant of the patent: **02.06.1999**
(21) Application number: 96939474.1
(22) Date of filing: 14.10.1996
(51) Int. Cl.: G06F 9/44, G06F 9/455

(54) **PORTABLE OBJECT-ORIENTED OPERATING SYSTEM**
PORTIERBARES OBJEKTORIENTIERTES BETRIEBSSYSTEM
SYSTEME D'EXPLOITATION PORTABLE ORIENTE OBJET

(30) Priority: 16.10.1995 US 543666
(43) Date of publication of application: 10.06.1998
(73) Proprietor: OBJECT TECHNOLOGY LICENSING CORP. doing business as OTLC, Cupertino, CA 95014 (US)
(72) Inventor: KANUNGO, Rajesh, Sunnyvale, CA 94087 (US)
(74) Representative: Kindermann, Manfred
(86) International application number: US9616700
(87) International publication number: WO9715006

(56) References cited:
- US-A- 5 379 432
- JOURNAL OF INFORMATION PROCESSING, vol. 14, no. 4, 1991, pages 442-453, XP002026235 DAVID L. BLACK ET AL.: "Microkernel Operating System Architecture and Mach"

## Description

A portion of the disclosure of this patent application contains material which is subject to copyright protection. The copyright owner has no objection to the facsimile reproduction by anyone of the patent disclosure, as it appears in the Patent and Trademark Office patent files or records, but otherwise reserves all copyright rights whatsoever.

### Field Of The Invention

The present invention relates generally to object-oriented computing environments, and more particularly to a system and method for providing an object-oriented interface for a procedural or other object-oriented operating system.

### Background Of the Invention

Object-oriented technology (OOT), which generally includes object-oriented analysis (OOA), object-oriented design (OOD), and object-oriented programming (OOP), is earning its place as one of the most important new technologies in software development. OOT has already begun to prove its ability to create significant increases in programmer productivity and in program maintainability. By engendering an environment in which data and the procedures that operate on the data are combined into packages called objects, and by adopting a rule that demands that objects communicate with one another only through well-defined messaging paths, OOT removes much of the complexity of traditional, procedure-oriented programming.

The following paragraphs present a brief overview of some of the more important aspects of OOT. More detailed discussions of OOT are available in many publicly available documents, including *Object Oriented Design With Applications* by Grady Booch (Benjamin/Cummings Publishing Company, 1991) and *Object-Oriented Requirements Analysis and Logical Design* by Donald G. Firesmith (John Wiley & Sons, Inc., 1993). The basic component of OOT is the object. An object indudes, and is characterized by, a set of data (also called attributes) and a set of operations (called methods) that can operate on the data. Generally, an object's data may change only through the operation of the object's methods.

A method in an object is invoked by passing a message to the object (this process is called message passing). The message specifies a method name and an argument list. When the object receives the message, code associated with the named method is executed with the formal parameters of the method bound to the corresponding values in the argument list. Methods and message passing in OOT are analogous to procedures and procedure calls in procedure-oriented software environments. However, while procedures operate to modify and return passed parameters, methods operate to modify the internal state of the associated objects (by modifying the data contained therein). The combination of data and methods in objects is called encapsulation. Perhaps the greatest single benefit of encapsulation is the fact that the state of any object can only be changed by well-defined methods associated with that object. When the behavior of an object is confined to such well-defined locations and interfaces, changes (that is, code modifications) in the object will have minimal impact on the other objects and elements in the system. A second "fringe benefit" of good encapsulation in object-oriented design and programming is that the resulting code is more modular and maintainable than code written using more traditional techniques.

The fact that objects are encapsulated produces another important fringe benefit that is sometimes referred to as data abstraction. Abstraction is the process by which complex ideas and structures are made more understandable by the removal of detail and the generalization of their behavior. From a software perspective, abstraction is in many ways the antithesis of hard-coding. Consider a software windowing example: if every detail of every window that appears on a user's screen in a graphical user interface (GUI)-based program had to have all of its state and behavior hard-coded into a program, then both the program and the windows it contains would lose almost all of their flexibility. By abstracting the concept of a window into a window object, object-oriented systems permit the programmer to think only about the specific aspects that make a particular window unique. Behavior shared by all windows, such as the ability to be dragged and moved, can be shared by all window objects.

This leads to another basic component of OOT, which is the class. A class includes a set of data attributes plus a set of allowable operations (that is, methods) on the data attributes. Each object is an instance of some class. As a natural outgrowth of encapsulation and abstraction, OOT supports inheritance. A class (called a subclass) may be derived from another class (called a base class, a parent class, etc.) wherein the subclass inherits the data attributes and methods of the base class. The subclass may specialize the base class by adding code which overrides the data and/or methods of the base class, or which adds new data attributes and methods. Thus, inheritance represents a mechanism by which abstractions are made increasingly concrete as subclasses are created for greater levels of specialization. Inheritance is a primary contributor to the increased programmer efficiency provided by OOP. Inheritance makes it possible for developers to minimize the amount of new code they have to write to create applications. By providing a significant portion of the functionality needed for a particular task, classes in the inheritance hierarchy give the programmer a head start to program design and creation. One potential drawback to an object-oriented environment lies in the proliferation of objects that must exhibit behavior which is similar and which one would like to use as a single message name to describe. Consider, for example, an object-oriented graphical environment: if a Draw message is sent to a Rectangle object, the Rectangle object responds by drawing a shape with four sides. A Triangle object, on the other hand, responds by drawing a shape with three sides. Ideally, the object that sends the Draw message remains unaware of either the type of object to which the message is addressed or of how that object that receives the message will draw itself in response. If this ideal can be achieved, then it will be relatively simple to add a new kind of shape later (for example, a hexagon) and leave the code sending the Draw message completely unchanged.

In conventional, procedure-oriented languages, such a linguistic approach would wreak havoc. In OOT environments, the concept of polymorphism enables this to be done with impunity. As one consequence, methods can be written that generically tell other objects to do something without requiring the sending object to have any knowledge at all about the way the receiving object will understand the message. Software programs, be they object-oriented,procedure-oriented, rule based, etc., almost always interact with the operating system to access the services provided by the operating system. For example, a software program may interact with the operating system in order to access data in memory, to receive information relating to processor faults, to communicate with other processes, or to schedule the execution of a process.

Most conventional operating systems are procedure-oriented and include native procedural interfaces. Consequently, the services provided by these operating systems can only be accessed by using the procedures defined by their respective procedural interfaces. If a program needs to access a service provided by one of these procedural operating systems, then the program must include a statement to make the appropriate operating system procedure call. This is the case, whether the software program is object-oriented, procedure-oriented, rule based, etc. Thus, conventional operating systems provide procedure-oriented environments in which to develop and execute software. Some of the advantages of OOT are lost when an object-oriented program is developed and executed in a procedure-oriented environment. This is true, since all accesses to the procedural operating system must be implemented using procedure calls defined by the operating system's native procedural interface. Consequently, some of the modularity, maintainability, and reusability advantages associated with object-oriented programs are lost since it is not possible to utilize classes, objects, and other OOT features to their fullest extent possible.

One solution to this problem is to develop object-oriented operating systems having identical native object-oriented interfaces. While this ultimately may be the best solution, it currently is not a practical solution since the resources required to modify all of the major, procedural operating systems would be enormous. Also, such a modification of these procedural operating systems would render useless thousands of procedure-oriented software programs. Therefore, what is needed is a mechanism for enabling an object-oriented application to interact in an object-oriented manner with a procedural or object-oriented operating system having a native interface.

Another solution is illustrated in U.S. Patent No. 5,379,432 in which a code library is provided which implements an object-oriented interface to the procedural operating system. The code library includes object-oriented class information which allows an object-oriented program to instantiate objects which include methods for accessing the operating system services using procedural function calls that are compatible with the operating system native procedural interface. Therefore, in order to use a particular operating system service, an object-oriented application can instantiate an object associated with that service and then call an object method which in turn, makes the correct operating system procedural call. Such a system suffers from the disadvantage that each object is very closely correlated with a particular operating system service. Therefore, an object-oriented program written to use the objects may not be portable to other operating systems which offer different services.

### Summary of the Invention

The present invention is directed to a system and method of enabling an object-oriented application to access in an object-oriented manner any operating system having a procedural or object-oriented operating system. The system includes computer program logic implementing an object-oriented class library. The object-oriented class library comprises related object-oriented classes for first translating object-oriented statements in the application program that request an operating system service into platform-independent object-oriented statements that describe the requested service in generic terms. The generic platform-independent statement are then broken into one or more specific platform-independent object-oriented function calls. Finally, the object oriented function calls are translated into platform specific functon calls that are compatible with the operating system native procedural interface.

Preferably, the class library includes:
(1) kernel services application programming interface classes which generate objects that enable an application to access in an object-oriented manner generic operating system services;
(2) abstract semantic engine classes which generate objects that provide specific platform-independent object-oriented function calls used to construct the services provides by the kernel services application programming interface classes; and
(3) platform specific implementation classes which generate objects that can be used to implement the specific platform-independent object-oriented function calls required by the abstract semantic engine and which translate method calls on these classes to operating system specific function calls.

Other utility classes may also be provided when the host operating system does not provide some of the features and services which are used by the object-oriented application program.

Further features and advantages of the present invention, as well as the structure and operation of various embodiments of the present invention, are described in detail below with reference to the accompanying drawings, and in the claims. In the drawings, identical reference numbers indicate identical or functionally similar elements.

### Brief Description of the Drawings

The present invention will be described with reference to the accompanying drawings, wherein:
Figure 1 illustrates a block diagram of a computer platform in which the Kernel Services API of the present invention operates;
Figure 2 is a high-level flow chart illustrating the operation of the present invention;
Figure 3 is a more detailed flowchart illustrating the operation of the present invention;
Figure 4 is a block diagram of a code library containing an object-oriented class library of the present invention;
Figure 5 is a class diagram of thread and task classes of the present invention;
Figure 6 is a class diagram of scheduling classes of the present invention;
Figure 7 illustrates well-known icons for representing class relationships and cardinality in class diagrams;
Figure 8 illustrates mechanism for layering the application over an operating system with intermediate layers;
Figure 9 illustrates the Abstract Semantic Engine classes and their relation to KSAPI classes;
Figure 10 illustrates Platform Specific Thread Classes that may be implemented on different operating system platforms; and
Figure 11 illustrates the classes that are used to implement a registry of collaborating tasks for common KSAPI services.

### Detailed Description of the Preferred Embodiments

### Computing Environment

The present invention is directed to a system and method for providing an object-oriented interface to any operating system having a native procedural or object-oriented interface. The present invention emulates the same object-oriented software environment on any computer platform having a procedural or object-oriented operating system. More particularly, the present invention is directed to a system and method of enabling an object-oriented application to access in an object-oriented manner any operating system having a native procedural or object-oriented interface during run-time execution of the application in a computer. The present invention is preferably a part of the run-time environment of the computer in which the application executes. In this patent application, the present invention is sometimes called an object-oriented Kernel Services Application Program Interface (KSAPI) since it operates to wrap an operating system with an object-oriented software layer such that an object-oriented application can access the operating system in an object-oriented manner consistently without regard to the actual features provided by the operating system.

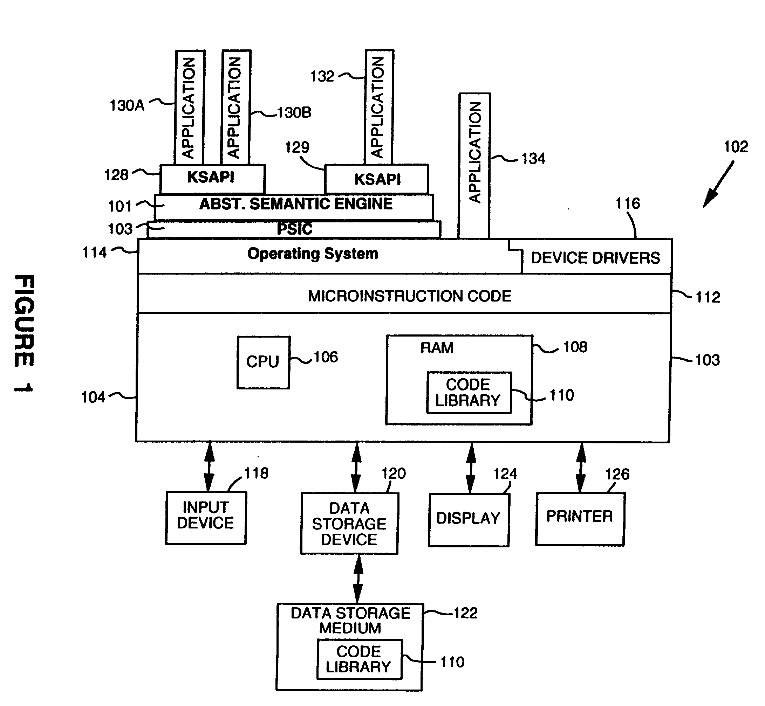

Figure 1 illustrates a block diagram of a computer platform 102 in which a Kernal Services Application Program Interface (KSAPI) 128 and 129, an Abstract Semantic Engine 101 and a Platform Specific Implementation Classes (PSIC) 103 of the present invention operates. It should be noted that the present invention alternatively encompasses the KSAPI 128,129, Abstract Semantic Engine 101 and PSIC 103 in combination with the computer platform 102. The computer platform 102 includes hardware components 103, such as a random access memory (RAM) 108 and a central processing unit (CPU) 106. It should be noted that the CPU 106 may represent a single processor, but preferably represents multiple processors operating in parallel. The computer platform 102 also includes peripheral devices which are connected to the hardware components 103. These peripheral devices include an input device or devices (such as a keyboard, a mouse, a light pen, etc), a data storage device 120 (such as a hard disk or floppy disk), a display 124, and a printer 126. The data storage device 120 may interact with a removable data storage medium 122 (such as a removable hard disk, a magnetic tape cartridge, or a floppy disk), depending on the type of data storage device used. The computer platform 102 also includes a procedural operating system 114 having a native procedural or object-oriented interface. The interface includes functions which are called to access services provided by the operating system 102.

The computer platform 102 further includes device drivers 116, and may include microinstruction code 112 (also called firmware). As indicated in Figure 1, in performing their required functions the device drivers 116 may interact with the operating system 114. Application programs130, 132, 134 (described further below) preferably interact with the device drivers 116 via the operating system 114, but may alternatively interact directly with the device drivers 116. It should be noted that the operating system 114 may represent a substantially full-function operating system, such as the Disk Operating System (DOS), Microsoft's NT, WIN95, IBM Operating System/2 and the UNIX operating system. However, the operating system 114 may represent other types of operating systems. For purposes of the present invention, the only requirement is that the operating system 114 have a procedural or object-oriented native interface. Preferably, the operating system 114 represents a limited functionality operating system, such as the Mach micro-kernel developed by CMU, which is well-known to those skilled in the relevant art. In a preferred embodiment of the present invention, the computer platform 102 is an Intemational Business Machines (IBM) computer or an IBM-compatible computer. In an alternate embodiment of the present invention, the computer platform 102 is an Apple computer.

### Overview of a Kernal Services API

Various application programs 130, 132, 134 preferably operate in parallel on the computer platform 102. Preferably, the application programs 130, 132, 134 are adapted to execute in different operating environments. For example, the application programs 130A and 130B may be adapted to operate in an object-oriented environment. The application program 132 may be adapted to operate in a Microsoft Windows environment, an IBM OS/2 environment, or a Unix environment. As will be appreciated by those skilled in the relevant art, the application programs 130A, 130B, and 132 cannot interact directly with the operating system 114 unless the operating system 114 implements an environment in which the application programs 130A, 130B, and 132 are adapted to operate. For example, if the application 132 is adapted to operate in an IBM OS/2 environment, then the application 132 cannot directly interact with the operating system 114 unless the operating system 114 is the IBM OS/2 operating system (or compatible). If the application programs 130A and 130B are adapted to operate in an object-oriented environment, then the applications 130A, 130B cannot directly interact with the operating system 114 since the operating system 114 has a procedural interface or an object-oriented interface different from the KSAPI 128. In the example shown in Figure 1, the application 134 is adapted to operate in the computing environment created by the operating system 114, and therefore the application 134 is shown as being connected directly to the operating system 114.

The KSAPI 128 is directed to a mechanism for providing an operating system independant object-oriented interface. The KSAPI 128 enables the object-oriented applications 130A, 130B to access in an object-oriented manner the ASE 101 during run-time execution of the applications 130A, 130B on the computer platform 102. The ASE 101 provides abstract services which are provided by PSIC 103. PSIC 103 is directed towards providing translation from object-oriented method calls to operating system 114 function calls. The KSAPI 129 is conceptually similar to the KSAPI 128. The KSAPI 129 provides an IBM OS/2 interface for the operating system 114, such that the application 132 can access in a OS/2 manner the operating system 114 (assuming that the application 132 is adapted to operate in the IBM OS/2 environment). The discussion of the present invention shall be limited herein to the KSAPI 128, the Abstract Semantic Engine (ASE) 101 and Platform Specific Implementation Classes (PSIC) 103 which provides an object-oriented interface to a procedural or object-oriented operating system having a native interface.

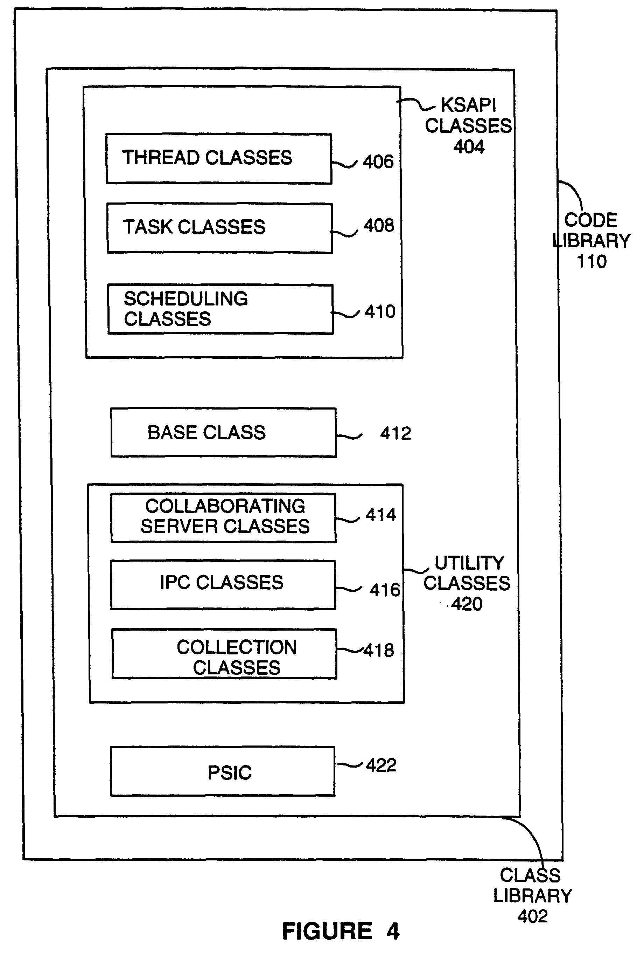

The KSAPI 128, ASE 101, PSIC 103 are preferably implemented as a code library 110 which is stored in the RAM 108. The code library 110 may also be stored in the data storage device 120 and/or the data storage medium 122. The code library 110 implements an object-oriented class library 402 (see Figure 4). In accordance with the present invention, the object-oriented class library 402 includes related object-oriented classes for enabling an object-oriented application (such as the applications 130A and 130B) to access in an object-oriented manner services provided by the operating system 114. The object-oriented classes comprise methods which include function calls compatible with the native interface of the operating system 114. Object-oriented statements defined by the object-oriented class library 402 (such as object-oriented statements which invoke one or more of the methods of the class library 402) are insertable into the application 130 to enable the application 130 to access in an object-oriented manner the operating system services during run-time execution of the application 130 on the computer platform 102. The object-oriented class library 402 is further described in sections below.

The code library 110 preferably includes compiled, executable computer program logic which implements the object-oriented class library 402. The computer program logic of the code library 110 is not linked to application programs. Instead, relevant portions of the code library 110 are copied into the executable address spaces of processes during run-time. This is explained in greater detail below. Since the computer program logic of the code library 110 is not linked to application programs, the computer program logic can be modified at any time without having to modify, recompile and/or relink the application programs (as long as the interface to the code library 110 does not change).

As noted above, the present invention shall be described herein with reference to the IBM AIX operating system, although the use of the present invention to wrap other operating systems falls within the scope of the present invention.

The IBM AIX operating system provides users with a number of services with are grouped into the following categories: threads, tasks, virtual memory, interprocess communication (IPC), scheduling and synchronization. The class library 402 of the present invention includes a set of related classes for each of the categories. Referring to Figure 4, the class library 402 includes:
(1) KSAPI thread classes 406 for enabling an application to access in an object-oriented manner operating system services to spawn, control, and obtain information relating to threads;
(2) KSAPI task classes 408 for enabling an application to access in an object-oriented manner operating system services to reference and control tasks, wherein the tasks each represents an execution environment for threads respectively associated with the tasks;
(3) KSAPI scheduling classes 410 for enabling an application to access in an object-oriented manner operating system services to schedule execution of threads;
(4) Abstract Semantic Engine classes 412 which are used to provide all the services required by the KSAPI classes in an abstract and platform independent manner;
(5) Collaborating Server Classes 414 which provide a mechanism for routing requests and replies between tasks and for notification in the case of creation or death of a new task;
(6) PSIC IPC classes 410 for enabling an application to access in an object-oriented manner operating system services to communicate with other processes during run-time execution of the application in a computer;
(7) PSIC utility classes 416 that extend AIX in order to provide services not provided.
(8) Collection classes 418 that provide a mechanism to create collections of instances of objects.

The class library 402 may include additional classes for other service categories that are offered by Mach in the future. For example, security services are currently being developed for Mach. Accordingly, the class library 402 may also include security classes 420 for enabling an application to access in an object-oriented manner operating system security services. As will be appreciated, the exact number and type of classes included in the class library 402 depends on the implementation of the underlying operating system.

### Operational Overview of a Preferred Embodiment

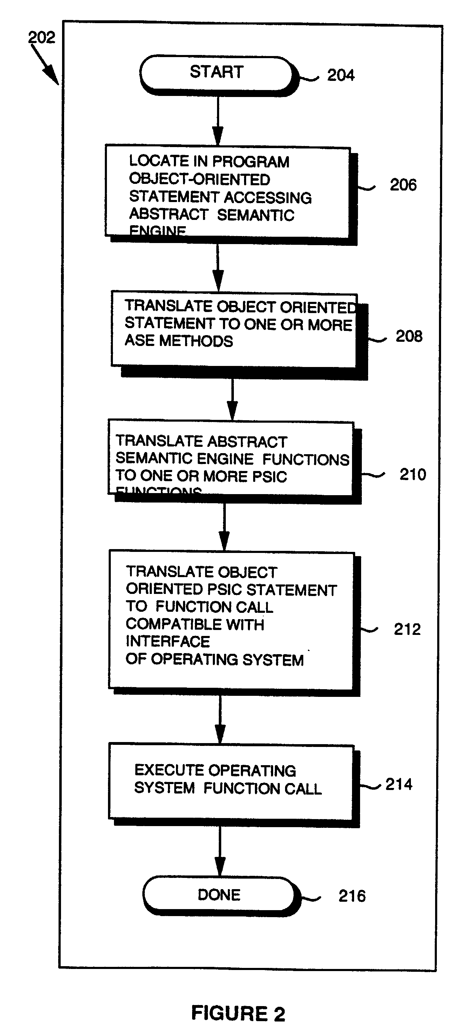

The operation of the present invention shall now be generally described with reference to Figure 2, which illustrates a high-level operational flow chart 202 of the present invention. The present invention is described in the context of executing the object-oriented application 130A on the computer platform 102. In step 206, which is the first substantive step of the flow chart 202, an object-oriented statement provided by KSAPI 128 is located in the application 130A during the execution of the application 130A on the computer platfonn 102. The object-oriented statement is defined by the object-oriented class library 402. For example, the object-oriented statement may reference a method defined by one of the of the class library 402. The following steps describe the manner in which the statement is executed by the computer platform 102.

In step 208, the object-oriented KSAPI 128 statement is translated into one or more object-oriented ASE 101 methods which define the behavior required to express the object-oriented KSAPI 128 statement. In performing step 208, the statement is translated to the computer program logic from the code library 110 which implements the method referenced in the statement.

In step 210, each ASE 101 method is translated into one or more object-oriented PSIC 103 methods. This translation may involve taking advantage of C++ abstraction by sub-classing from the ASE class a specific PSIC class and over-riding the abstract method. The over-ridden method invokes PSIC 103 methods. In the case that the PSIC 103 available for that operating system do not provide sufficient functionality, other Utility Classes (UC) methods may also be used to extend the functionality provided by the operating system 114.

In step 212, an object-oriented PSIC 103 method is translated into at least one procedural or object-oriented operating system 114 function. This translation may vary from one operating system to another. PSIC 103 wraps procedural or object-oriented interfaces of the operating system 114 in object-oriented statements that are required to implement ASE 101 methods.
As noted above, the PSIC 103 method includes at least one function call which is compatible with the native interface of the operating system 114. In step 214, the procedural function call from step 212 is executed in the computer platform 102 to thereby cause the operating system 114 to provide the service on behalf of the application 130A. Step 210 is performed by executing the method discussed in step 208, thereby causing the procedural function call to be invoked.

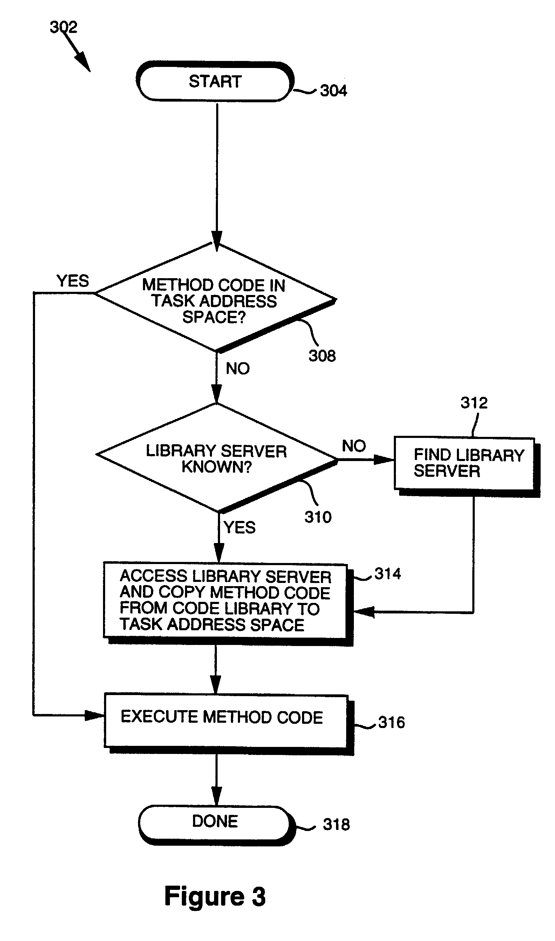

The operation of a preferred embodiment shall now be described in more detail with reference to Figure 3, which illustrates a detailed operational flow chart 302 of the present invention. Again, the present invention is described in the context of executing the object-oriented application 130A on the computer platform 102. More particularly, the present invention is described in the context of executing a single object-oriented statement of the object-oriented application 130A on the computer platform 102. The application 130A includes statements which access services provided by the operating system 114, and it is assumed that such statements are defined by the class library 402 (in other words, the programmer created the application 130A with reference to the class library 402). As will be discussed in greater detail below, the executable entity in the Mach micro-kernel is called a thread. The processing organization entity in the Mach micro-kernel is called a task. A task includes one or more threads (which may execute in parallel), and an address space which represents a block of virtual memory in which the task's threads can execute. At any time, there may be multiple tasks active on the computer platform 102. When executing on the computer platform 102, the application 130A could represent an entire task (having one or more threads), or could represent a few threads which are part of a task (in this case, the task would have other threads which may or may not be related to the operation of the application 130A). The scope of the present invention encompasses the case when the application 130A is an entire task, or just a few threads of a task.

Referring now to Figure 3, in step 308, it is determined whether the computer program logic (also called computer code) from the code library 110 which implements the method referenced in the statement is present in the task address space associated with the application 130A. If the computer program logic is present in the task address space, then step 316 is processed (described below). If the computer program logic is not present in the task address space, then the computer program logic is transferred to the task address space in steps 310, 312, and 314. In step 310, it is determined whether the library server (not shown) associated with the code library 110 is known. The code library 110 may represent multiple code libraries (not shown) related to the KSAPI 128, ASE 101 and PSIC 103 wherein each of the code libraries include the computer program logic for one of the object-oriented classes of the class library 402. As those skilled in the relevant art will appreciate, there may also be other code libraries (not shown) completely unrelated to the KSAPI 128, ASE 101 and PSIC 103.

Associated with the code libraries are library servers, each of which manages the resources of a designated code library. A processing entity which desires access to the computer program logic of a code library makes a request to the code library's library server. The request may include, for example, a description of the desired computer program logic and a destination address to which the computer program logic should be sent. The library server processes the request by accessing the desired computer program logic from the code library and sending the desired computer program logic to the area of memory designated by the destination address. The structure and operation of library servers are well known to those skilled in the relevant art. Thus, in step 310 it is determined whether the library server associated with the code library 110 which contains the relevant computer program logic is known. Step 310 is performed, for example, by referencing a library server table which identifies the known library servers and the code libraries which they service. If the library server is known, then step 314 is processed (discussed below). Otherwise, step 312 is processed. In step 312, the library server associated with the code library 110 is identified. The identity of the library server may be apparent, for example, from the content of the object-oriented statement which is being processed.

After the library server associated with the code library 110 is identified, or if the library server was already known, then step 314 is processed. In step 314, a request is sent to the library server asking the library server to copy the computer program logic associated with the method reference in the statement to the task address space. Upon completion of step 314, the library server has copied the requested computer program logic to the task address space. Preferably, the code library 110 is a shared library. That is, the code library 110 may be simultaneously accessed by multiple threads. However, preferably the computer program logic of the code library 110 is physically stored in only one physical memory area. The library server virtually copies computer program logic from the code library 110 to task address spaces. That is, instead of physically copying computer program logic from one part of physical memory to another, the library server places in the task address space a pointer to the physical memory area containing the relevant computer program logic. In step 316, the computer program logic associated with the object-oriented statement is executed on the computer platform 102. As noted above, in the case where the object-oriented statement accesses the operating system 114, the computer program logic associated with the method contains at least one function call which is compatible with the native interface of the operating system 114. Thus, by executing the method's computer program logic, the function call is invoked and executed, thereby causing the operating system 114 to provide the service on behalf of the application 130A.

The above-described performance in the computer platform 102 of steps 306, 308, 310, 312, and 314 is due, in large part, to the run-time environment established in the computer platform 102. As will be appreciated by those skilled in the relevant art, the run-time environment of the computer platform 102 is defined by the run-time conventions of the particular compiler which compiles the application program 130A. For example, the run-time conventions may specify that when an instruction accessing an operating system service is encountered, corresponding code from the code library 110 should be transferred to the task address space (via the associated library server) and executed. Compiler run-time conventions are generally well known. As will be appreciated, run-time conventions are specific to the particular compilers used. The run-time conventions for use with the present invention and with a particular compiler would be apparent to one skilled in the art based on the disclosure of the present invention contained herein, particularly to the disclosure associated with the flow chart 302 in Fig. 3.
As described above, the KSAPI 128, ASE 101 and PSIC 103 of the present invention is implemented as a code library 110 which includes computer program logic implementing the object-oriented class library 402. Alternatively, KSAPI 128, ASE 101 and PSIC 103 may be implemented as a hardware mechanism which essentially operates in accordance with the flow chart 302 of Figure 3 to translate object-oriented statements (defined by the class library 402) in application programs to function calls compatible with the interface of the operating system 114. Or, the KSAPI 128, ASE 101 and PSIC 103 may be implemented as a background software process operating on the computer platform 102 which captures all accesses to the operating system 114 (made by object-oriented statements defined by the class library 402) and which translates the accesses to function calls compatible with the interface of the operating system 114. Other implementations of the KSAPI 128, ASE 101 and PSIC 103 will be apparent to those skilled in the relevant art based on the disclosure of the present invention contained herein.

### Mach Services

This section provides an overview of the abstractions and services provided by the Mach micro-kernel which is for background information only. The services are described for each of the major areas of the Mach micro kernel. As noted above, these include: threads, tasks, virtual memory, IPC, scheduling, synchronization services, hardware faults, and host/privilege services (also called machine services). The Mach micro-kernel is further discussed in many publicly available documents, including: K. Loepere, editor, "Mach 3 Kernel Principles", *Open Software Foundation and Carnegie Mellon University, Draft Industrial Specification,* September 1992 and November 1992; K. Loepere, editor, "Mach 3 Kernel Interfaces", *Open Software Foundation and Carnegie Mellon University, Draft Industrial Specification,* September 1992 and November 1992; K Loepere, editor, "Mach 3 Server Writer's Guide", *Open Software Foundation and Carnegie Mellon University, Draft Industrial Specification,* September 1992 and November 1992; K Loepere, editor, "Mach 3 Server Writer's Interfaces", *Open Software Foundation and Carnegie Mellon University, Draft Industrial Specification,* September 1992 and November 1992; A. Silberschatz, J. Peterson, P. Galvin, *Operating System Concepts,* Addison-Wesley, July 1992; and A. Tanenbaum, *Modern Operating Systems,* Prentice Hall, 1992.

### Threads

The executable entity in Mach is known as a *thread.* Threads have several aspects that enable them to execute in the system. A thread is always contained in a task, which represents most of the major resources (e.g., address space) of which the thread can make use. A thread has an *execution* state, which is basically the set of machine registers and other data that make up its context. A thread is always in one of several scheduling states: executing, ready to execute, or blocked for some reason. Threads are intended to be light-weight execution entities. This is to encourage the programmer to make use of multiple threads in applications, thus introducing more concurrency into the system than has been found in traditional operating systems. Although threads are not without some cost, they really are fairly minimal and the typical application or server in a Mach environment can take advantage of this capability.

Threads do have some elements associated with them, however. The containing task and address space, as well as the execution state, have already been discussed. Each thread has a *scheduling policy,* which determines when and how often the thread will be given a processor on which to run. The scheduling sources are discussed in more detail in a later section. Closely tied to the scheduling policy of a thread is the optional *processor set* designation, which can be used in systems with multiple processors to more closely control the assignment of threads to processors for potentially greater application performance. As indicated before, an address space (task) can contain zero or more threads, which execute concurrently. The kernel makes no assumptions about the relationship of the threads in an address space or, indeed, in the entire system. Rather, it schedules and executes the threads according to the scheduling parameters associated with them and the available processor resources in the system. In particular, there is no arrangement (e.g., hierarchical) of threads in an address space and no assumptions about how they are to interact with each other. In order to control the order of execution and the coordination of threads to some useful end, Mach provides several synchronization mechanisms. The simplest (and coarsest) mechanism is thread-level suspend and resume operations. Each thread has a suspend count, which is incremented and decremented by these operations. A thread whose suspend count is positive remains blocked until the count goes to zero.

Finer synchronization can be obtained through the use of synchronization objects (semaphores or monitors and conditions), which allow a variety of different synchronization styles to be used. Threads can also interact via inter-process communication (IPC). Each of these services is described in more detail in later sections. Basic operations exist to support creation, termination, and getting and setting attributes for threads. Several other control operations exist on threads that can be performed by any thread that has a send right to the intended thread's control port. Threads can be terminated explicitly. They can also be interrupted from the various possible wait situations and caused to resume execution with an indication that they were interrupted. Threads can also be "wired", which means that they are marked as privileged with respect to kernel resources, i.e., they can consume physical memory when free memory is scarce. This is used for threads in the default page-out path. Finally, threads also have several important IPC ports (more precisely, the send or receive rights to these ports), which are used for certain functions. In particular, each thread has a *thread self port,* which can be used to perform certain operations on the thread by itself. A thread also has a set of *fault ports* which is used when the thread encounters a processor fault during its execution. There is also a distinguished port that can be used for gathering samples of the thread's execution state for monitoring by other threads such as debuggers or program profilers.

### Tasks

The basic organizational entity in Mach for which resources are managed is known as a *task*. Tasks have many objects and attributes associated with them. A task fundamentally comprises three things. A task contains multiple *threads,* which are the executable entities in the system. A task also has an *address space,* which represents virtual memory in which its threads can execute. And a task has a *port name space,* which represents the valid IPC ports through which threads can communicate with other threads in the system. Each of these fundamental objects in a task is discussed in greater detail in the following sections. Note that a task is not, of itself, an executable entity in Mach. However, tasks can contain threads, which are the execution entities. A task has a number of other entities associated with it besides the fundamental ones noted above. Several of these entities have to do with scheduling decisions the kernel needs to make for the threads contained by the task. *Thescheduling parameters, processor set* designation, and *host* information all contribute to the scheduling of the task's threads. A task also has a number of distinguished interprocess communication *ports* that serve certain pre-defined functions. Ports and other aspects of interprocess communication are discussed at length in a later section. For now, it is sufficient to know that port resources are accumulated over time in a task. Most of these are managed explicitly by the programmer. The distinguished ports mentioned above generally have to do with establishing connections to several important functions in the system. Mach supplies three *"special" ports* with each task. The first is the *task self port,* which can be used to ask the kernel to perform in operations on the task. The second special port is the *bootstrap port,* which can be used for anything (it's OS environment-specific) but generally serves to locate other services. The third special port that each task has is the *host name port,* which allows the task to obtain certain information about the machine on which it is running. Additionally, Mach supplies several "*registered*" *ports* with each task that allow the threads contained in the task to communicate with certain higher-level servers in the system (e.g., the Network Name Server, the "Service" Server, and the Environment Server).

Two other useful sets of ports exist for each task that allow fault processing and program state sampling to be performed. The fault *ports* of a task provide a common place for processor faults encountered by threads in the task to be processed. Fault processing is described more fully in a later section. The *PC sample port* allows profiling tools to repeatedly monitor the execution state of the threads in the task. Many operations are possible for tasks. Tasks can be created and terminated. Creation of a new task involves specifying some existing task as a prototype for the initial contents of the address space of the new task. A task can also be terminated, which causes all of the contained threads to be terminated as well. The threads contained in a task can be enumerated and information about the threads can be extracted. Coarse-grain execution of a task (more precisely, the threads in the task) can be controlled through suspend and resume operations. Each task has a suspend count that is incremented and decremented by the suspend and resume operations. The threads in the task can execute as long as the suspend count for the containing task is zero. When the suspend count is positive, all threads in the task will be blocked until the task is subsequently resumed. Finally, the various parameters and attributes associated with a task (e.g., scheduling priority) can be queried and set as desired.

### Virtual Memory

Mach supports several features in its virtual memory (VM) subsystem. Both the external client interfaces as well as the internal implementation offer features that are not found in many other operating systems. In broadest terms, the Mach virtual memory system supports a large sparsely populated virtual address space for each of the tasks running in the system. Clients are provided with general services for managing the composition of the address space. Some aspects of the VM system are actually implemented by components that are outside of the micro-kernel, which allows great flexibility in tailoring certain policy functions to different system environments. The internal architecture of the Mach VM system has been divided into machine-independent and machine-dependent modules for maximum portability. Porting to a new processor/MMU architecture is generally a small matter of implementing a number of functions that manipulate the basic hardware MMU structures. Mach has been ported to a number of different processor architectures attesting to the portability of the overall kernel and the virtual memory system in particular. The address space of a Mach task contains a number of *virtual memory regions.* These regions are pieces of virtual address space that have been allocated in various ways for use by the task. They are the only locations where memory can be legitimately accessed. All references to addresses outside of the defined regions in the address space will result in an improper memory reference fault. A virtual memory region has several interesting attributes. It has a page-aligned starting address and a size, which must be a multiple of the system page size. The pages in the region all have the same access protections; these access protections can be read-only, read-write, or execute. The pages in a region also have the same inheritance characteristic, which may be used when a new task is created from the current task. The inheritance characteristic for pages in a region can be set to indicate that a new task should inherit a read-write copy of the region, that it should inherit a virtual copy of the region, or that it should inherit no copy of the region. A read-write copy of a region in a new address space provides a fully shared mapping of the region between the tasks, while a virtual copy provides a copy-on-write mapping that essentially gives each task its own copy of the region but with efficient copy-on-write sharing of the pages constituting the region.

Every virtual memory region is really a mapping of an abstract entity known as a *memory object.* A memory object is simply a collection of data that can be addressed in some byte-wise fashion and about which the kernel makes no assumptions. It is best thought of as some pure piece of data that can either be explicitly stored some place or can be produced in some fashion as needed. Many different things can serve as memory objects. Some familiar examples include files, ROMs, disk partitions, or fonts. Memory objects have no pre-defined operations or protocol that they are expected to follow. The data contained in a memory object can only be accessed when it has been tied to a VM region through mapping. After a memory object has been mapped to a region, the data can be accessed via normal memory read and write (load and store) operations. A memory object is generally managed by a special task known as an *external memory manager or pager.* A pager is a task that executes outside of the micro-kernel much like any other task in the system. It is a user-mode entity whose job is to handle certain requests for the data of the memory objects it supports. As threads in a client task reference the pages in a given region, the kernel logically fills the pages with the data from the corresponding byte addresses in the associated memory object. To accomplish this the kernel actually engages in a well-defined (and onerous) protocol with the pager whenever it needs to get data for page faults or when it needs to page-out data due to page replacements. This protocol, which is known as the *External Memory Management Interface* (or *EMMI),* also handles the initialization sequences for memory objects when they are mapped by client tasks and the termination sequences when any associated memory regions are deallocated by client tasks.

There can be any number of pagers running in the system depending on which memory objects are in use by the various client tasks. Pagers will typically be associated with the various file systems that are mounted at a given time, for example. Pagers could also exist to support certain database applications, which might have needs for operations beyond what is supported by the file system. Pagers could also exist for certain servers that wish to supply data to their clients in non-standard ways (e.g., generating the data computationally rather than retrieving it from a storage subsystem). The micro-kernel always expects to have a certain distinguished pager known as the *default pager* running in the system. The default pager is responsible for managing the memory objects associated with anonymous virtual memory such stacks, heaps, etc. Such memory is temporary and only of use while a client task is running. As described above, the main entities in the Mach VM system are regions, memory objects, and pagers. Most clients, however, will deal with virtual memory through operations on *ranges* of memory. A range can be a portion of a region or it could span multiple contiguous regions in the address space. Operations are provided by Mach that allow users to allocate new ranges of virtual memory in the address space and deallocate ranges as desired. Another important operation allows a memory object to be mapped into a range of virtual memory as described above. Operations are also available to change the protections on ranges of memory, change the inheritance characteristics, and wire (or lock) the pages of a range into physical memory. It is also possible to read ranges of memory from another task or write into ranges in another task provided that the control port for the task is available. Additional services are available that allow the user to specify the expected reference pattern for a range of memory. This can be used by the kernel as advice on ways to adapt the page replacement policy to different situations. Yet another service is available to synchronize (or flush) the contents of a range of memory with the memory object(s) backing it. Finally services are available to obtain information about regions and to enumerate the contents of a task's address space described in terms of the regions it contains.

### Interprocess Communication

Mach has four concepts that are central to its interprocess communications facilities: *Ports, Port Sets, Port Rights,* and *Messages.* One of these concepts, Port Rights, is also used by Mach as a means to identify certain common resources in the system (such as threads, tasks, memory objects, etc).

### Ports

Threads use ports to communicate with each other. A *port* is basically a message queue inside the kernel that threads can add messages to or remove message from, if they have the proper permissions to do so. These "permissions" are called *port rights.* Other attributes associated with a port, besides port rights, include a limit on the number of messages that can be enqueued on the port, a limit on the maximum size of a message that can be sent to a port, and a count of how many rights to the port are in existence. Ports exist solely in the kernel and can only be manipulated via port rights.

### Port Rights

A thread can add a message to a port's message queue if it has a *send right* to that port. Likewise, it can remove a message from a port's message queue if it has a *receive right* to that port. Port rights are considered to be resources of a task, not an individual thread. There can be many send rights to a port (held by many different tasks); however, there can only be one receive right to a port. In fact, a port is created by allocating a receive right and a port is destroyed only when the receive right is deallocated (either explicitly or implicitly when the task dies). In addition, the attributes of a port are manipulated through the receive right Multiple threads (on the same or different tasks) can send to a port at the same time, and multiple threads (on the same task) can receive from a port at the same time. Port rights act as a *permission* or *capability* to send messages to or receive messages from a port, and thus they implement a low-level form of security for the system. The "owner" of a port is the task that holds the receive right. The only way for another task to get a send right for a port is if it is explicitly given the right - either by the owner or by any task that holds a valid send right for the port. This is primarily done by including the right in a message and sending the message to another task. Giving a task a send right grants it permission to send as many messages to the port as it wants. There is another kind of port right called a *send-once right* that only allows the holder to send one message to the port, at which time the send-once right become invalid and can't be used again. Note that ownership of a port can be transferred by sending the port's receive right in a message to another task.

Tasks acquire port rights either by creating them or receiving them in a message. Receive rights can only be created explicitly (by doing a port allocate, as described above); send rights can be created either explicitly from an existing send or receive right or implicitly while being transmitted in a message. A send-once right can be created explicitly or implicitly from a receive right only. When a right is sent in a message the sender can specify that the right is either *copied, moved,* or a new right *created* by the send operation. (Receive rights can only be *moved,* of course.) When a right is *moved,* the sender looses the right and the receiver gains it. When *copied,* the sender retains the right but a copy of the right is created and given to the receiver. When *created,* the sender provides a receive right and a new send or send-once right is created and given to the receiver. When a task acquires a port right, by whatever means, Mach assigns it a name. Note that ports themselves are not named, but their port rights are. (Despite this fact, the creators of Mach decided to refer to the name of a port right with the term *port name* , instead of the obvious *port right name).* This name is a scalar value (32-bits on Intel machines) that is guaranteed unique only within a task (which means that several tasks could each have a port name with the same numeric value but that represent port rights to totally different ports) and is chosen at random. Each distinct right held by a task does not necessarily have a distinct port name assigned to it. Send-once rights always have a separate name for each right. Receive and send rights that refer to the same port, however, will have the same name.

Port rights have several attributes associated with them: the type of the right *(send, send-once, receive, port set,* or *dead name),* and a reference count for each of the above types of rights. When a task acquires a right for a port to which it already has send or receive rights, the corresponding reference count for the associated port name is incremented. A port name becomes a *dead name* when its associated port is destroyed. That is, all port names representing send or send-once rights for a port whose receive right is deallocated become dead names. A task can request notification when one of its rights becomes dead. The kernel keeps a system-wide count of the number of send and send-once rights for each port. Any task that holds a receive right (such as a server) can request a notification message be sent when this number goes to zero, indicating that there are no more senders (clients) for the port. This is called a *no more senders* notification. The request must include a send right for a port to which the notification should be sent.

### Port Sets

Port sets provide the ability to receive from a collection of ports simultaneously. That is, receive rights can be added to a port set such that when a receive is done on the port set, a message will be received from one of the ports in the set. The name of the receive right whose port provided the message is reported by the receive operation.

### Messages

A Mach IPC message comprises a *header* and an *in-line data* portion, and optionally some *out-of-line memory* regions and *port rights.* If the message contains neither port rights nor out-of-line memory, then it is said to be a *simple* message; otherwise it is a *complex* message. A simple message contains the message header directly followed by the in-line data portion. The message header contains a destination port send right, an optional send right to which a reply may be sent (usually a send-once right), and the length of the data portion of the message. The in-line data is of variable length (subject to a maximum specified on a per-port basis) and is copied without interpretation. A complex message consists of a message header (with the same format as for a simple message), followed by: a count of the number of out-of-line memory regions and ports, disposition arrays describing the kernel's processing of these regions and ports, and arrays containing the out-of-line descriptors and the port rights.

The port right disposition array contains the desired processing of the right, i.e., whether it should be copied, made, or moved to the target task. The out-of-line memory disposition array specifies for each memory range whether or not it should be de-allocated when the message is queued, and whether the memory should be copied into the receiving task's address space or mapped into the receiving address space via a virtual memory copy-on-right mechanism. The out-of-line descriptors specify the size, address, and alignment of the out-of-line memory region. When a task receives a message, the header, in-line data, and descriptor arrays are copied into the addresses designated in the parameters to the receive call. If the message contains out-of-line data, then virtual memory in the receiving task's address space is automatically allocated by the kernel to hold the out-of-line data. It is the responsibility of the receiving task to deallocate these memory regions when they are done with the data.

### Message Transmission Semantics

Mach IPC is basically asynchronous in nature. A thread sends a message to a port, and once the message is queued on the port the sending thread continues execution. A receive on a port will block if there are no messages queued on the port. For efficiency there is a combined send/receive call that will send a message and immediately block waiting for a message on a specified reply port (providing a synchronous model). A time-out can be set on all message operations which will abort the operation if the message is unable to be sent (or if no message is available to be received) within the specified time period. A send call will block if it uses a send-right whose corresponding port has reached its maximum number of messages. If a send uses a send-once right, the message is guaranteed to be queued even if the port is full. Message delivery is reliable, and messages are guaranteed to be received in the order they are sent. Note that there is special-case code in Mach which optimizes for the synchronous model over the asynchronous model; the fastest IPC round-trip time is achieved by a server doing a receive followed by repeated send/receive's in a loop and the client doing corresponding send/receive's in a loop on its side.

### Port Rights as Identifiers

Because the kernel guarantees both that port rights cannot be counterfeited and that messages cannot be misdirected or falsified, port rights provide a very reliable and secure identifier. Mach takes advantage of this by using port rights to represent almost everything in the system, including tasks, threads, memory objects, external memory managers, permissions to do system-privileged operations, processor allocations, and so on. In addition, since the kernel can send and receive messages itself (it represents itself as a "special" task), the majority of the kernel services are accessed via IPC messages instead of system-call traps. This has allowed services to be migrated out of the kernel fairly easily where appropriate.

### Synchronization

Currently, Mach provides no direct support for synchronization capabilities. However, conventional operating systems routinely provide synchronization services. Such synchronization services employ many well-known mechanisms, such as semaphores and monitors and conditions, which are described below. Semaphores are a synchronization mechanism which allows both exclusive and shared access to a resource. Semaphores can be acquired and released (in either an exclusive or shared mode), and they can optionally specify time-out periods on the acquire operations. Semaphores are optionally recoverable in the sense that when a thread that is holding a semaphore terminates prematurely, the counters associated with the semaphore are adjusted and waiting threads are unblocked as appropriate.
*Monitors* and conditions are a synchronization mechanism which implements a relatively more disciplined (and safer) style of synchronization than simple semaphores. A monitor lock (also called a mutex) is essentially a binary semaphore that enables mutually exclusive access to some data. Condition variables can be used to wait for and signify the truth of certain programmer-defined Boolean expressions within the context of the monitor. When a thread that holds a monitor lock needs to wait for a condition, the monitor lock is relinquished and the thread is blocked. Later, when a another thread that holds the lock notifies that the condition is true, a waiting thread is unblocked and then re-acquires the lock before continuing execution. A thread can also perform a broadcast operation on a condition, which unblocks all of the threads waiting for that condition. Optional time-outs can also be set on the condition wait operations to limit the time a thread will wait for the condition.

### Scheduling

Since Mach is multiprocessor capable, it provides for the scheduling of threads in a multiprocessor environment. Mach defines processor sets to group processors and it defines scheduling policies that can be associated with them. Mach provides two scheduling policies: *timeshare* and fixed *priority.* The timeshare policy is based on the exponential average of the threads' usage of the CPU. This policy also attempts to optimize the time quantum based on the number of threads and processors. The fixed priority policy does not alter the priority but does round-robin scheduling on the threads that are at the same priority. A thread can use the default scheduling policy of its processor set or explicitly use any one of the scheduling policies enabled for its processor set. A maximum priority can be set for a processor set and thread. In Mach the lower the priority value, the greater the urgency.

### Faults

The Mach fault handling services are intended to provide a flexible mechanism for handling both standard and user-defined processor faults. The standard kernel facilities of threads, messages, and ports are used to provide the fault handling mechanism. (This document uses the word "fault" where the Mach documentation uses the word "exception". Such terminology has been changed herein to distinguish hardware faults from the exception mechanism of the C++ language). Threads and task have fault port(s). They differ in their inheritance rules and are expected to be used in slightly different ways. Error handling is expected to be done on a per-thread basis and debugging is expected to be handled on a per-task basis. Task fault ports are inherited from parent to child tasks, while thread fault ports are not inherited and default to no handler. Thread fault handlers take precedence over task fault handlers. When a thread causes a fault the kernel blocks the thread and sends a fault message to the thread's fault handler via the fault port. A handler is a task that receives a message from the fault port. The message contains information about the fault, the thread, and the task causing the fault. The handler performs its function according to the type of the fault. If appropriate, the handler can get and modify the execution state of the thread that caused the fault. Possible actions are to clear the fault, to terminate the thread, or to pass the fault on to the task-level handler. Faults are identified by types and data. Mach defines some machine-independent fault types that are supported for all Mach implementations (e.g., bad access, bad instruction, breakpoint, etc.). Other fault types can be implementation dependent (e.g., f-line, coprocessor violation, etc.).

### Host and Processor Sets

Mach exports the notion of the *host,* which is essentially an abstraction for the computer on which it is executing. Various operations can be performed on the host depending on the specific port rights that a task has for the host. Information that is not sensitive can be obtained by any task that holds a send right to the *host name port.* Examples of such information include the version of the kernel or the right to gain access to the value of the system clock. Almost all other information is considered sensitive, and a higher degree of privilege is required to get or manipulate the information. This added level of privilege is implied when a task holds a send right to the *host control port* (also known as the *host privilege port).* This right must be given out very carefully and selectively to tasks, because having this right enables a task to do virtually everything possible to the kernel, thus by-passing the security aspects of the system supported by the IPC services. Various operations can be performed with this added privilege, including altering the system's clock setting, obtaining overall performance and resource usage statistics for the system, and causing the machine to re-boot.

Mach also exports the notions of *processors* and *processor sets,* which allow tasks to more carefully specify when and on what processors its threads should execute. Processors and processor sets can be enumerated and controlled with the host privilege port. A processor represents a particular processor in the system, and a processor set represents a collection of processors. Services exist to create new processor sets and to add processors to a set or remove them as desired. Services also exist to assign entire tasks or particular threads to a set. Through these services a programmer can control (on a coarse grain) when the threads and tasks that constitute an application actually get to execute. This allows a programmer to specify when certain threads should be executed in parallel in a processor set. The default assignment for tasks and threads that do not explicitly use these capabilities is to the system *default processor set*, which generally contains any processors in the system that aren't being used in other sets.

### Security

Mach may include other categories of services in addition to those described above. For example, Mach may include services relating to security. In accordance with the Mach security, every task carries a *security token,* which is a scalar value that is uninterpreted by Mach. There is a port called the *host security port* that is given to the bootstrap task and passed on to the trusted security sever. A task's security token can be set or changed by any task that holds a send right to the host security port, while no special permissions are needed to determine the value of a tasks security token (other than holding the task's control port, of course). At the time a Mach IPC message is received, the security taken of the sender of the message is returned as one of the output parameters to the receiver function. Tasks that hold the host security port can send a message and assign a different security token to that message, so that it appears to have come from another task. These services can be used by upper layers of the system to implement various degrees of security.

### KSAPI Class Library

This section provides an area-by-area description of the object-oriented interface for the services provided by the various operating system environments. This object-oriented interface to the operating system 114 services represents the class library 402 as implemented by the code library 110. The class library 402 includes KSAPI 404 classes, ASE 412 classes, Utility Classes 420 and PSIC 422 classes, KSAPI 404 comprises thread classes 406, task classes 408, scheduling classes 410. Utility Classes 420 comprise Collaborating Server Classes 414, IPC Classes 416. Collection Classes 418. The KSAPI, ASE, PSIC class library 402 may include additional classes depending on the services provided by the underlying operating system 114. Each area is described with a class diagram and text detailing the purpose and function of each class. Selection methods are presented and defined (where appropriate, the parameter list of a method is also provided). Thus, this section provides a complete operational definition and description of the KSAPI, ASE, PSIC class library 402. The implementation of the methods of the KSAPI, ASE, PSIC class library 402 is discussed in a later section.

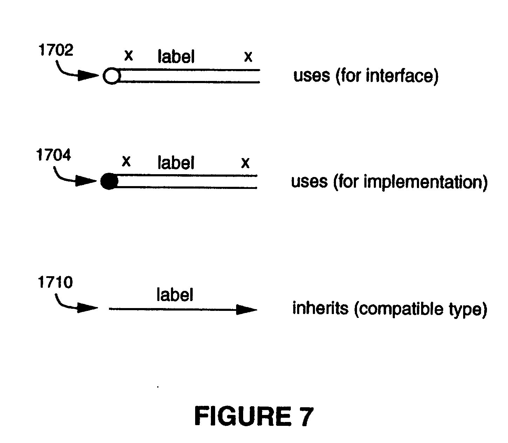

The class diagrams are presented using the well-known Booch icons for representing class relationships and cardinality. These Booch icons are presented in Figure 7 for convenience purposes. The Booch icons are discussed in *Object Oriented Design With Applications* by Grady Booch, referenced above. The KSAPI, ASE, PSIC class library 402 is preferably implemented using the well-known C++ computer programming language. However, the other programming languages could alternatively be used. Preferably, the class descriptions are grouped into SPI (System Programming Interface), API (Application Programming Interface), *Internal,* and *"Noose*" methods -- indicated by #ifndef statements bracketing the code in question (or by comments for Noose methods). SPI interfaces are specific to the particular computer platform being used. For illustrative purposes, the wrapper class library 402 is presented and described herein with respect to a computer platform operating in accordance with the IBM MicroKernel (which is based on Mach Version 3.0) or compatible. Persons skilled in the relevant art will find it apparent to modify the SPI classes to accommodate other computer platforms based on the teachings contained herein.

API interfaces are included in the KSAPI, ASE, PSIC class library 402 regardless of the platform the system is running on. The Internal interfaces are intended for use only by low-level implementors. The Noose methods are provided solely to enable an application 130 operating with the KSAPI 128 to communicate with an application 134 (or server) that was written to run on Mach 114 directly. The provide access to

### Thread Classes

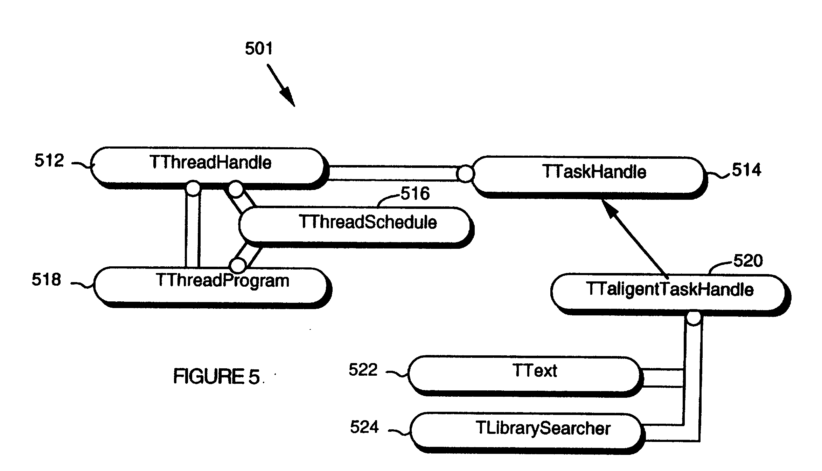

Figure 5 is a class diagram 501 of the KSAPI classes 404 comprising thread classes 406, the task classes 406 and the scheduling classes 408. The KSAPI classes 404 provide an object-oriented interface to the tasking and threading functionality that can be used by applications 130A and 130B. A number of the thread classes 404 are *handle* classes (so noted by their name), which means that they represent a reference to the corresponding kernel entity. The null constructors on the handle classes create an *empty handle* object. An empty handle object does not initially correspond to any kernel entity -- it must be initialized via streaming, an assignment, or a copy operation. Calling methods on an empty handle will cause an exception to be thrown. Multiple copies of a handle object can be made, each of which point to the same kernel entity. The handle objects are internally reference-counted so that the kernel entity can be deleted when the last object representing it is destroyed.

TThreadHandle is a concrete class that represents a thread entity in the system. It provides the methods for controlling and determining information about the thread. It also provides the mechanism for spawning new threads in the system. Control operations include killing, and doing a death watch on it. Constructing a TThreadHandle and passing in a TThreadProgram object causes a new thread to be constructed on the current task. The first code run in the new thread are the Prepare() and Run() methods of the TThreadProgram object. Destroying a TThreadHandle does not destroy the thread it represents. There is also be a cancel operation on the TThreadHandle object. Each TThreadHandle object contains a set of rights associated with it defined by the operating system 114. This information is not exported by the interface, in general, but because it does contain rights the only stream object a TThreadProgram can be streamed into is a TMessageStream. Attempting to stream into other TStream objects will cause an exception to be thrown.
TThreadHandle provides a number of methods for use by debuggers and the runtime environment, and for supporting interactions with Mach tasks running outside of the environment established by the KSAPI 128. These methods include getting and setting the state of a thread, spawning an "empty" thread in another task, getting the thread's process identifier and the operating systeme specific thread identifier.

As noted above, the KSAPI 128 establishes a computing environment in which the applications 130 operate. For brevity, this computing environment established by the KSAPI 128 shall be called CE. With regard to the KSAPI 128, TThreadHandle spawns a CE runtime thread on the current task. A thread can also be spawned on another task, instead of on the current task, by using the CreateThread methods in the TTaligentTaskHandle class. (Creating a thread on another task is not recommended as a general programming model, however.) To spawn a CE thread on another CE task, the TTaligentTaskHandle::CreateThread method is used by passing it a TThreadProgram describing the thread to be run. To spawn a non-CE thread (that is, a thread which does not operate in the computing environment established by the KSAPI 128), the CreateThread method is used on the appropriate subclass of TTaskHandle (that is, the subclass of TTaskHandle that has been created to operate with the other, non-CE computing environment). For example, to spawn an IBM OS2 thread on an OS2 task, you might use a TOS2TaskHandle::CreateThread method. It is not possible to run a CE thread on a non-CE task, nor is it possible to run a non-CE thread on a CE task.

TThreadHandle includes the following methods:

TThreadHandle (const TThreadProgram& copyThreadCode): creates a new thread in the calling task - makes an internal COPY of the TThreadProgram, which is deleted upon termination of the thread.

TThreadHandle (TThreadProgram∗ adoptThreadCode): creates a new thread in the calling task - ADOPTS adoptThreadCode which is deleted upon termination of the thread. The resources owned by the thread are also discarded. A copy of the TThreadProgram is NOT made.

TThreadHandle (EExecution yourself) creates a thead handle for the calling thread.

TStream streams in a TThreadHandle object to a TMessageStream.

CopyThreadSchedule () returns a pointer to the Scheduling object (e.g., TServerSchedule, TUISchedule etc) that is used to schedule the object. Allocates memory for the TThreadSchedule object which has to be disposed of by the caller.

SetThreadSchedule (const TThreadSchedule& newSchedule) sets the scheduling object in the thread to the newSchedule object. This allows one to control the way a thread is scheduled

CancelWaitAndPostException () const causes a blocking kernel call to be unblocked and a TKernelException to be thrown in the thread (*this).

WaitForDeathOf () const performs death watch on the thread - blocks calling thread until the thread (*this) terminates.

**TThreadProgram** is an abstract base class that encapsulates all the information required to create a new thread. This includes the code to be executed, scheduling information, and the thread's stack. To use, it must be subclassed and the Prepare and Run methods overridden, and then an instantiation of the object passed into the constructor for TThreadHandle to spawn a thread. The Prepare routine is provided to aid startup synchronization; Prepare is executed in the new thread before the TThreadHandle constructor completes, and the Run routine is executed after the TThreadHandle constructor completes. The methods CopyThreadSchedule and GetStackSize return the default thread schedule and stack size. To provide values different from the default, these methods should be overridden to return the desired thread schedule and/or stack size. TThreadProgram includes the following methods:

CetStackSize () returns the size of the stack to be set up for the thread. Override this method if you don't want the "default" stack size.

GetStack (): Used to set up the thread's stack. Override this method if you want to provide your own stack.

Prepare() is executed in the new thread before the TThreadHandle constructor completes.

Run () represents the entry point for the code to be run in the thread after Prepare() and the TThreadHandle constructor methods complete. OVERRIDE THIS METHOD to provide the code the thread is to execute.

### Task Classes

### See Figure 5 for a class diagram of the task classes 408.

**TTaskHandle** is a concrete base class that encapsulates all the attributes and operations of a task. It can be used to refer to and control any task on the system. TTaskHandle cannot be used directly to create a task, however, because it doesn't have any knowledge about any runtime environment. It does provide sufficient protocol, via protected methods, for subclasses with specific runtime knowledge to be created that can spawn tasks (TTaligentTaskHandle, below, is an example of such a class). TTaskHandle objects can only be streamed into and out of TMessageStreams and sent via IPC to other tasks, and they are returned in a collection associated with TTaskHandle. The task control operations associated with a TTaskHandle include killing the task, suspending and resuming the task, and doing a deathwatch on the task. The informational methods include getting its host, getting and setting its registered ports, enumerating its ports or virtual memory regions, getting its fault ports, enumerating its threads, etc. **TTaskHandle** includes the following methods:

TTaskHandle (EExecutionThread) creates a task handle for the specified thread.

Suspend 0 suspends the task (i.e., all threads contained by the task). Resume () resumes the task (i.e., all threads contained by the task).

Kill () terminates the task - all threads contained by the task are terminated.

WaitForDeathOf () performs death watch on the task - The calling thread blocks until the task (*this) terminates.

GetThreadSet(TCollection<aType> set) returns a set of threads in the task represented by the task handle.

### Scheduling Classes

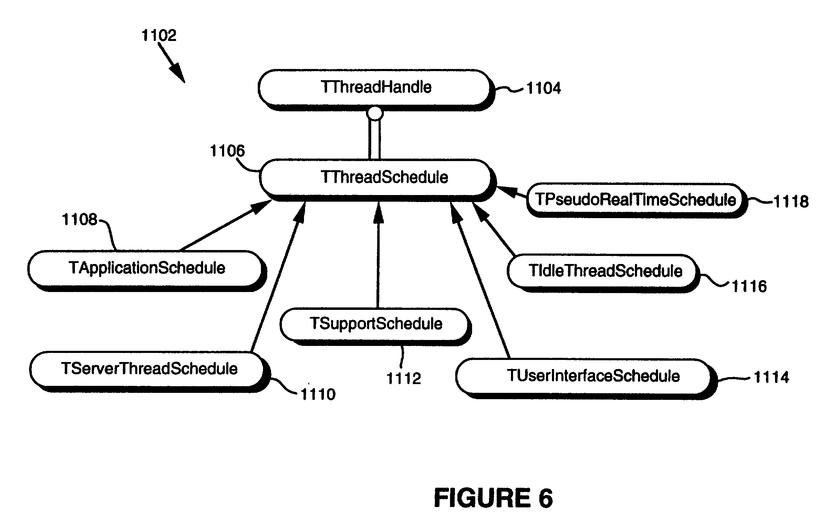

Figure 6 is a class diagram 1102 of the scheduling classes 410, which are used provide scheduling services to the application 130A, 130B.

**TThreadSchedule** is a concrete base class that embodies the scheduling behavior of a thread. It defines the thread's actual, default, and maximum priorities. The lower the priority value, the greater the urgency. Each processor set has a collection of enabled TThreadSchedules and a default one. A thread may be assigned any TThreadschedule that is enabled on the processor set on which the thread is running. The priority may be set up to the maximum value defined by TThreadSchedule, but use of this feature is strongly discouraged. Specific scheduling classes (TIdleSchedule, TServerSchdule etc.) are made available using this class as the base. However (since there are no pure virtual functions in this class) derived classes are free to create objects of this class if necessary (but it may not be required to do so). TThreadSchedule objects (using polymorphism) are used to specify scheduling policy for threads. The subclasses presented below should be used to determine the appropriate priority and proper range.

**TIdleThreadSchedule** is a concrete subclass of TThreadSchedule for those threads that are to run when the system is idle. They only run when nothing else in the system can run. This category, in general, would be used for idle timing, maintenance, or diagnostic threads.

**TServerSchedule** is a concrete subclass of TThreadSchedule for server threads. Server threads must be very responsive. They are expected to execute for a short time and then block. For services that take an appreciable amount of time, helper tasks with a different kind of TThreadSchedule (TSupportSchedule) should be used.

**TUserInterfaceSchedule** is a concrete subclass of TThreadSchedule for those application tasks that should be responsive and handle the application's human interface. They typically run for a short time and then block until the next interaction.

**TApplicationSchedule** is a class used with those threads that support an application's longer running parts. Such threads run for appreciable amounts of time. When an application or window is activated, the threads in the associated task become more urgent so that the threads become more responsive.

**TPseudoRealTimeThreadSchedule** is a class that allows tasks to specify their relative urgency in the fixed priority class by setting their level within its range. The task schedule exports the number of levels that are allowable and the default base level. If a level is requested that would cause the value to be outside the class range an exception will be thrown. This class includes the following methods:

SetLevel (PriorityLevels theLevel): Set the level of the task. A lower number is more urgent.

ReturnNumberOfLevels (): Return the number of levels of urgency for this scheduling object.

ReturnDefaultLevel (): Return the default level of urgency for this scheduling object. The default level is relative to the scheduling class's most urgent priority.

### Abstract Semantic Engine Classes

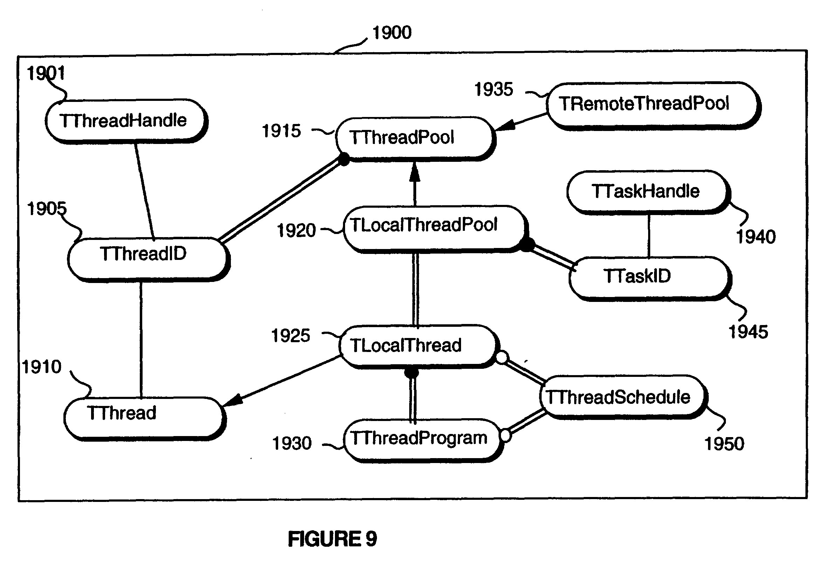

Figure 9 is a class diagram 1900 which describes the abstract semantic engine (ASE) classes comprising 101. TThreadHandle 1901, TTaskHandle 1940 and TThreadSchedule 1950 have already been described as components of KSAPI 128. The ASE classes in 1900 are described below:
(a) TThreadID 1905: A thread identifier unique across all address spaces. TThreadID is monomorphic
(b) TThreadPool 1915: A virtual class that contains a collection of threads. Responsible for handing out threads, deleting threads and maintaining information on threads to allow cancellation and death watch semantics.
(c) TLocalThreadPool 1920: A sub-class of TThreadPool that is a collection of TLocalThread instances.
(d) TRemoteThreadPool1935: A sub-class of TThreadPool that provides capabilities to manipulate remote tasks and threads as if the access is directly possible without any IPC.
(e) TThread 1910: A pure virtual class representing a thread.
(f) TLocalThread 1925: A sub-class of TThread that represents a thread in the local address space.
(g) TraskID 1945: A task identifier unique across all address spaces. TTaskID is monomorphic.

**Class TThreadID** 1905 is implemented in a platform specific manner and belongs to the PSIC classes. The functionality of a TThreadID class is to uniquely identify a thread and be able to provide a way to compare two TThreadHandle instances by comparing the two instance of TThreadID class embedded in the TThreadHandle class.

**Class TThreadPool** 1915 is an abstract class for representing a collection of threads in any task. It provides the following abstract methods:

Exists(const TThreadID threadID) checks if the thread exists.

Exists(const TTaskID taskID) checks if a task exists.

Kill(const TThreadID threadID) kills the thread.

WaitForDeathOf(const TTaskID taskID) waits for death of a task.

WaitForDeathOf(const TThreadID threadID) waits for death of a thread.

CancelWaitAndPostException(const TThreadID &) posts a cancellation request on a thread.

IsLocal(const TThreadID threadID) checks if the thread is local to the task in which the method is called.

GetThreadSet(const TTaskID, TThreadID ∗ array) retrns an array of threads in a task.

**Class TLocalThreadPool** 1920 is an abstract derived class of TThreadPool 1915 and represents threads local to a task. It provides the following abstract methods: AllocateThread(TThreadProgram *) allocates the resources required to create a thread in an abstract manner.

ReleaseThread(TThreadID &) releases resources for a thread in an abstract manner.

Run(TThreadID &) makes an allocated thread run.

SetRemoteWaiter(TThreadID &) requests a local thread to note that a thread in another task has requested to be notified in the case of the death of the local thread.

**Class TRemoteThreadPool** represents the collection of threads and tasks other than the local task. It provides the following abstract methods:

WakeUpWaiters(const TThreadID &) wakes up all waiters waiting for the death of the thread in the case that the method, SetRemoteWaiter(TThreadID &), was invoked on the thread in its task.

**Class TThread** 1910 is an abstract class that represents an actual thread in a task. It provides the following abstract methods:

CancelWaitAndPostException() posts a cancellation request on the thread.

Kill() kils the thread.

IsLocal() checks if the thread is local to the task.

SetState() sets the currents state of the thread.

GetState() Gets the state of the thread.

**Class TTaskID** 1945 uniquely represents a task. Its implementation is platform specific. A TTaskHandle contains a TTaskID. Two TaskHandle instance represent the same task if the embedded TTaskID instances are equal.

### Platform Specific Thread Classes

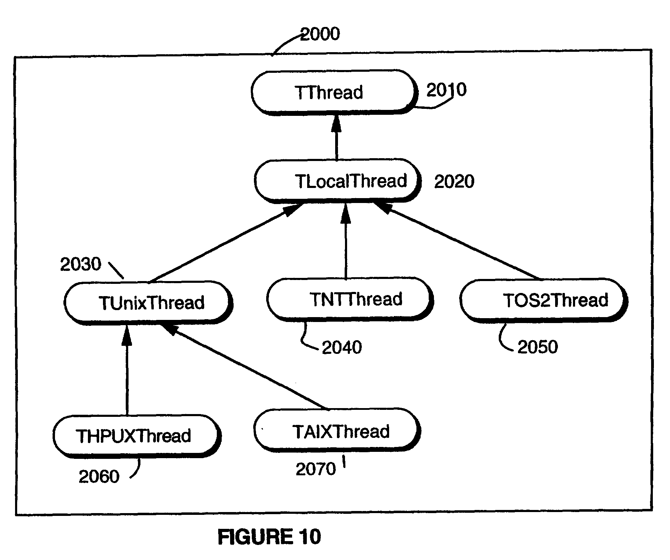

Figure 10 is a class diagram of sub-classes of TThread 2010 class which may be implemented on different platforms. The concrete c sub-classes belong to PSIC 103. The advantage of sub-classing is that certain features specific to particular classes are kept isolated in the PSIC class and does not interfere with the operation of the ASE classes.
(a) Class TUnixThread 2030 is an abstract class that implements the methods of TLocalThread 2020 in a manner typical to Unix platforms.
(b) Class TAIXThread 2070 is a concrete class that implements direct mapping between AIX Operating System function calls and TUnixThread methods in a platform specific manner.
(c) Class THPUXThread 2060 is a concrete class that implements direct mapping between HP-UX Operating System function calls and TUnixThread methods in a platform specific manner.
(d) Class TNTThread 2040 is a concrete class that implements direct mapping between NT Operating System function calls and TLocalThread methods in a platform specific manner.
(e) Class TOS2Thread 2040 is a concrete class that implements direct mapping between OS2 Operating System function calls and TLocalThread methods in a platform specific manner.

### Collaborating Tasks Registry

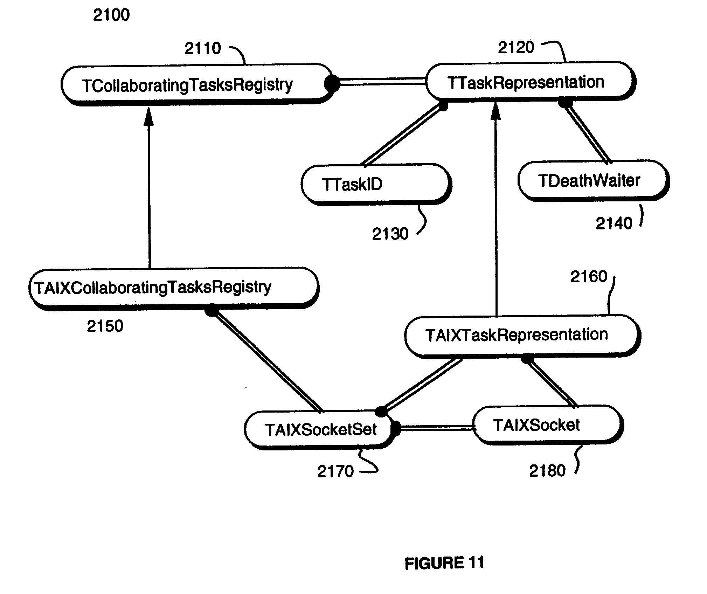

Figure 11 is a class diagram of Utility Classes 2100 which may be required on many platforms including AIX, HP-UX, NT and OS/2 which do not support all the services required by the Abstract Semantic Engine 101 when threads have to invoke methods on other tasks and threads belonging to other tasks.

Utility Classes 2100 have been described with the instances being available in a server task and use AIX socket connection, TAIXSocketSet 2170 and TAIXSocket 2180, for communication. However, the classes may also be instantiated as a Kernel Extension on AIX or as device driver s on HP-UX, NT or OS/2 and use function invocations to the operating systems instead of using TAIXSocketSet 2170 and TAIXSocket 2180 classes. Alternatively, an implementation on Mach might choose to use Mach ports for communication between tasks.

**Class TCollaboratingTasksRegistry** 2110 is an abstract class which provides a mechanism for tasks to register . Requests between tasks are then forwarded by using the information provided during the registration process. This registration provides a mechanism to route requests and replies between tasks. Any general algorithm ( for example, linked lists, hashes, arrays) may be used for storing and looking-up these tasks.

**Class TTaskRepresentation** 2120 is an abstract class which represents a task for the purpose of registration in the TCollaboratingTasksRegistry.

**Class TTaskID** 2130 is the same as in 1945.

**Class TDeathWaiter** 2140 represents a record of a pending request made by a task on another task. An instance of a TDeathWaiter is added when a request is made and it is deleted either when the corresponding reply is received or when the target task or thread dies. When the target thread or task dies, the record of TDeathWaiter provides information for notifying the thread waiting for the reply.

**Class TAIXCollaboratingTasksRegistry** 2150 is a PSIC derived class of TCollaboratingTasksRegistry that provides additional support for communication between tasks by using the well known Unix programing paradigm of sockets. The sockets allow all tasks to register with the registry by establishing a connection.

**Class TAIXTaskRepresentation** 2160 is a PSIC derived class of TTaskRepresentation which provides not only Task representation but also contains a communication mechanism, TAIXSocket.

**TAIXSocket** 2180 is a PSIC class that provides a mechanism for communication using the well known Unix communication programming paradigm, Unix Domain sockets. TAIXSocket may be substituted by MACH ports, NT ports or some other platform specific mechanism for Inter-task communication without effecting the functionality of TCollaboratingTasksRegistry and TTaskRepresentation Since Unix Domain sockets can be made to have rights such that other users can not access them, the registry can be made secure from other users.

**TAIXSocketSet** 2170 is a PSIC class that represents set of all the instances of TAIXSocket class 2180 at any given instance of time.

Collaborating Tasks are all the the tasks that are using the KSAPI on a particular host platform. A Collaborating Tasks Registry mechanism provides a platform independent mechanism for requesting services between tasks. The TCollaboratingTasksRegistry is used as a dictionary of all tasks using KSAPI.

### Architecture

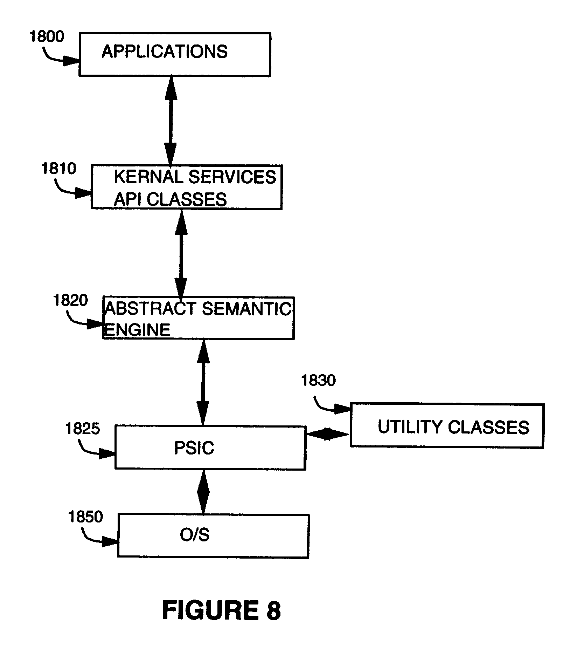

Figure 8 is an block diagram of the KSAPI architecture in accordance with a preferred embodiment of the invention. Application programs 1800 can include procedural or object-oriented applications that are targetted to execute on the operating system 1850.

### Implementation of KSAPI Methods

As noted above, the AIX and the AIX procedural interface are well-known. The class library 402, and the operation of the methods of the class library 402, have been defined and described in detail above. Implementation of the methods defined by the class library 402 is described below by considering selected methods from the class library 402. Persons skilled in the relevant art will find it apparent to implement the other methods of the class library 402 based on the well-known specification of the AIX, the discussion above regarding the class library 402, and the discussion below regarding the implementation of the methods. The implementation of the Kill() method from the TThreadHandle class of the thread classes 406 is shown in Code Example 2, below. A routine called "example1" is shown in Code Example 1, below. The "example1" routine includes a decomposition statement which causes the kill() method to be executed. Code Example 2 shows how a Kill() method is implemented in terms of a method provided by the Abstract Semantic Engine Class, TThreadPool. Code Example 3 displays how an ASE class, TThreadPool, implements a Kill() method in terms of a platform specific implementation class (PSIC), TAIXThread. Code Example 4 displays how a PSIC class, TAIXThread maps a C++ method to a procedural method invcation provided by the operating system, pthread_cancel.

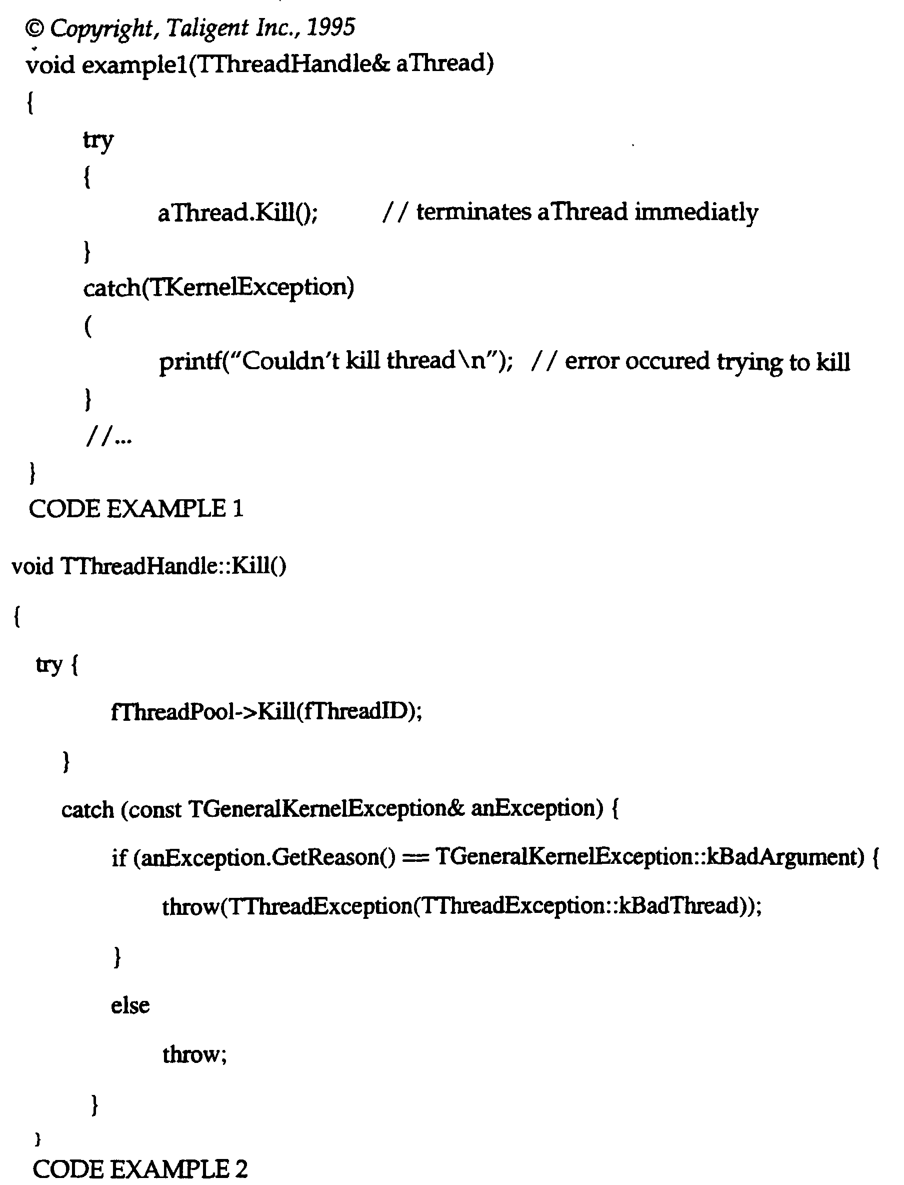

Where:

**fThreadPool** is an instance of a TThreadPool subclass of TLocaThreadPool that contains a set of TThread instances.

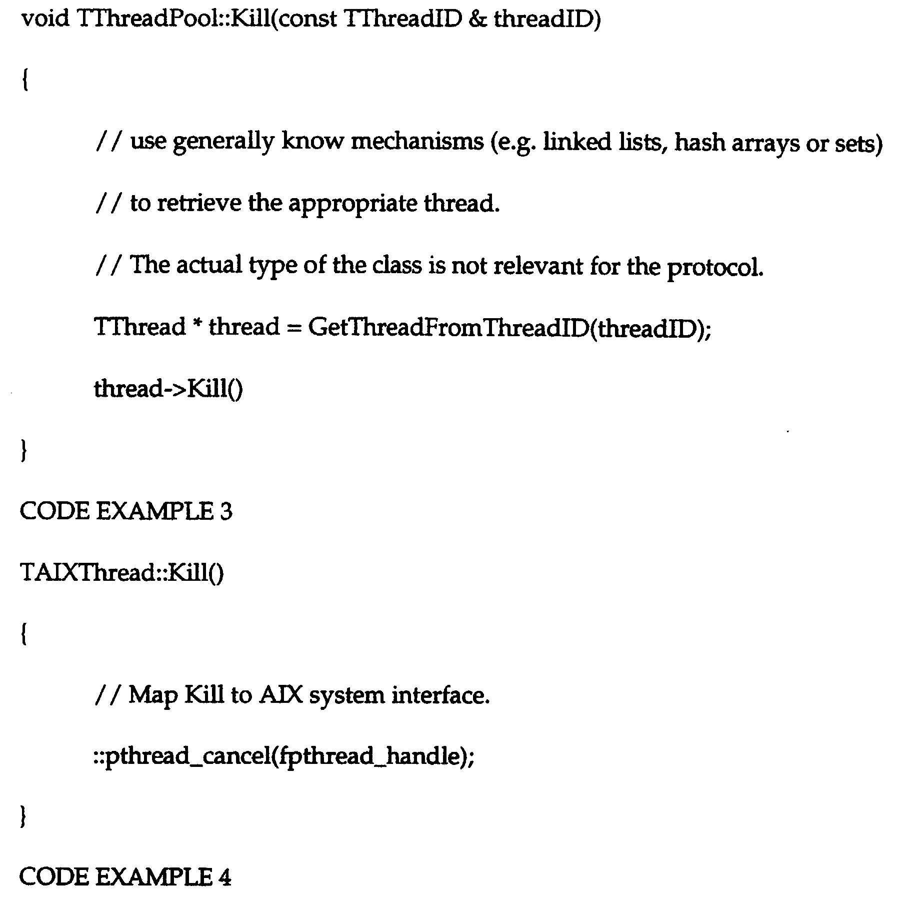

Where:
fpthread_handle identifies the thread to the AIX operating system.
**throw, try** and **catch** are part of the C++ language that allow you to throw and catch C++ exceptions.
The implementation of the WaitForDeathOf() method from the TThreadHandle class of the task classes 406 is shown in Code Example 4, below. A routine called "example2" is shown in Code Example 5, below. The "example2" routine includes a decomposition statement which causes the WaitForDeathOf() method to be executed. Code Example 6 describes how a WaitForDeathOf() method is implemented in terms of ASE class, TThreadPool. Code Example 7 displays how an ASE class, TThreadPool, implements a WaitForDeathOf() method in terms of a platform specific implementation class (PSIC), TAIXThread. Code Example 8 displays how a PSIC class, TAIXThread maps a C++ method to a procedural method, WaitForDeathOf(), invcation provided by the operating system function invocation, pthread_join().

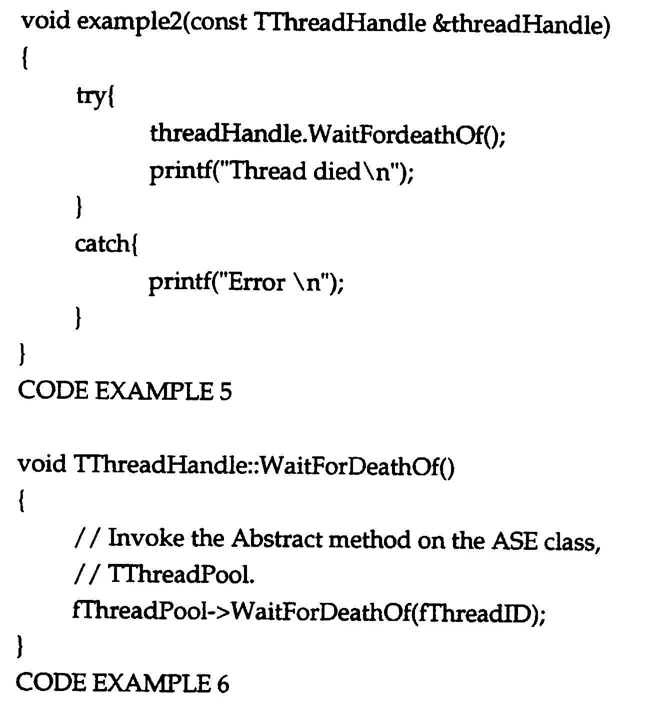

Where:
**fThreadPool** is an instance of a TThreadPool subclass of TLocaThreadPool that contains a set of TThread instances.

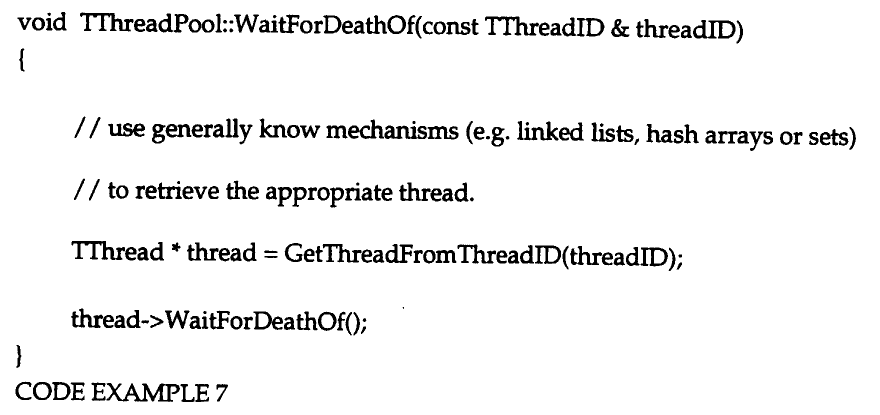

Where:
GetThreadFromID(TThreadID &) is implemented using general programming principles as linked lists, hashes, arrays, etc.

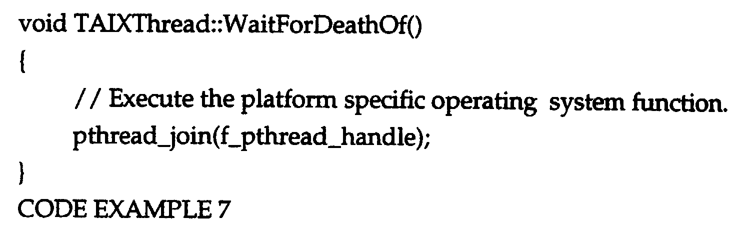

Where:
**TAIXThread** is a PSIC class and represents a thread on an AIX platform.

**THROW, TRY, CATCH,** and **ENDTRY** are part of the C++ language that allow you to throw and catch C++ exceptions.

Variations on the present invention will be obvious to persons skilled in the relevant art based on the discussion contained herein. For example, the scope of the present invention includes a system and method of enabling a procedural application to access in a procedural manner an object-oriented operating system having a native object oriented interface during run-time execution of the application in a computer. This embodiment of the present invention preferably operates by locating in the application a procedural statement which accesses a service provided by the operating system, and translating the procedural statement to an object-oriented function call (i.e., method) compatible with the native object-oriented interface of the operating system and corresponding to the procedural statement. The object-oriented function call is executed in the computer to thereby cause the operating system to provide the service on behalf of the application. While various embodiments of the present invention have been described above, it should be understood that they have been presented by way of example only, and not limitation. Thus, the breadth and scope of the present invention should not be limited by any of the above-described exemplary embodiments, but should be defined only in accordance with the following claims and their equivalents.

## Claims

1. A method for enabling an object-oriented application program running on a computer platform (102) to access a platform-specific operating system (114) during run-time to request system services, the method locating in the application program a platform-independent object-oriented statement which requests a system service (206), tanslating the platform-independent object-oriented statement to commands which are necessary to access a service program provided by the operating system that provides the system service and executing the commands (214)
CHARACTERIZED IN THAT
the platform-independent object-oriented statement is first translated to platform-independent abstract object-oriented statements defining a generic service independent of the platform-specific operating system (208), the platform-independent abstract object-oriented statements are further translated to one or more platform-independent object-oriented function calls specific to the requested operating system service (210), the platform-independent object-oriented function calls are translated into platform-specific function calls compatible with the operating system (212) and the platform-specific function calls are executed to provide the requested service (214).

2. The method as recited in claim 1, wherein the step of translaling the platform-independent object-oriented function calls into platform-specific function calls (212) includes the steps of creating utility classes (2100) which provide extend services and using the utility classes to construct registry objects (TCollaboratingTasksRegistry) and task objects (TTaskRepresentation) which communicate requests between tasks.

3. The method as recited in claim 1, wherein the step of translating the platform-independent object-oriented function calls into platform-specific function calls (212) includes the steps of creating utility classes (2100) which provide extend services and using the utility classes to construct socket objects (TAIXSocket, TAIXSocketSet) which provide interprocess communication for connection of sockets.

4. The method as recited in claim 1, wherein the step of translating the platform-independent object-oriented function calls into platform-specific function calls (212) includes the steps of creating utility classes (2100) which provide extend services and using the utility classes to construct task ID objects (TTaskID) which provide a unique global identifier.

5. The method as recited in claim 1, wherein the step of translating the platform-independent object-oriented function calls into platform-specific function calls (210) includes the steps of creating utility classes (1900) which provide extend services and using the utility classes to construct thread pool objects (TThreadPool) which provide a thread pool for assignment to a task.

6. Apparatus for enabling an object-oriented application program running on a computer platform (102) to access a platform-specific operating system (114) during run-time to request system services, the apparatus including a mechanism for locating in the application program a platform-independent object-oriented statement which requests a system service, means for translating the platform-independent object-oriented statement to commands which are necessary to access a service program provided by the operating system that provides the system service and means for executing the commands (112, 114)
CHARACTERIZED IN THAT
the translating means includes means for translating the platform-independent abstract object-oriented statements defining a generic service independent of the platform-specific operating system (KSAPI 128), means for translating the platform-independent abstract object-oriented statements to one or more platform-independent object-oriented function calls specific to the requested operating system service (ASE 101), and means for translating the platform-independent object-oriented function calls into platform-specific function calls compatible with the operating system (PSIC 103).

7. The apparatus as recited in claim 6, wherein the means for translating the platform-independent object-oriented function calls into platform-specific function calls (PSIC 103) includes utility class code (2100) which provides extend services and means for using the utility class code to construct registry objects (TCollaboraringTasksRegistry) and task objects (TTaskRepresentation) which communicate requests between tasks.

8. The apparatus as recited in claim 6, wherein the means for translating the platform-independent object-oriented function calls into platform-specific function calls (PSIC 103) includes utility class code (2100) which provides extend services and means for using the utility class code to construct socket objects (TAIXSocket, TAIXSocketSet) which provide interprocess communication for connection of sockets.

9. The apparatus as recited in claim 6, wherein the means for translating the platform-independent object-oriented function calls into platform-specific function calls (PSIC 103) includes utility class code (2100) which provides extend services and means for using the utility class code to construct task ID objects (TTaskID) which provide a unique global identifier.

10. The apparatus as recited in claim 6, wherein the means for translating the platform-independent object-oriented function calls into platform-specific function calls (PSIC 103) includes utility class code (2100) which provides extend services and means for using the utility class code to construct thread pool objects (TThreadPool) which provide a thread pool for assignment to a task.

## Patentansprüche

1. Ein Verfahren zur Befähigung eines objektorientierten Anwendungsprogramms, das auf einer Computerplattform (102) ausgeführt wird, zum Zugriff auf ein plattformspezifisches Betriebssystem (114) während der Laufzeit zur Anforderung eines Systemservices, das Verfahren ermittelt in dem objektorientierten Anwendungsprogramm eine plattform-unabhängige objektorientierte Anweisung, die einen Systemservice (206) anfordert, übersetzt die plattform-unabhängige objektorientierte Anweisung in Befehle, die erforderlich sind zum Zugriff auf ein Servic-Programm, das durch das Betriebssystem verfügbar gemacht wird und das den Systemservice bereitstellt und die Befehle ausführt (214),
dadurch gekennzeichnet,
daß die plattform-unabhängige objektorientierte Anweisung zuerst in plattform-unabhängige abstrakte objektorientierte Anweisungen übersetzt wird, die einen generischen Dienst unabhängig vom plattform-spezifischen Betriebssystem (208) definieren, die plattform-unabhängigen abstrakten objektorientierten Anweisungen werden weiter in einen oder mehrere plattform-unabhängige objektorientierte Funktionsaufrufe zu dem angeforderten Betriebssystem-Service (210) übersetzt, die plattform-unabhängigen objektorientierte Funktionsaufrufe werden in plattform-spezifische Funktionsaufrufe übersetzt, die mit dem Betriebssystem (212) kompatibel sind, und die plattform-spezifischen Funktionsaufrufe werden ausgeführt, um den angeforderten Service (214) zur Verfügung zu stellen.

2. Das Verfahren nach Anspruch 1, worin der Schritt der Übersetzung der plattform-unabhängigen objektorientierten Funktionsaufrufe in plattform-spezifische Funktionsaufrufe (212) die Schritte der Erzeugung von Hilfsklassen (2100), die Erweiterungsdienste bereitstellen, und der Verwendung der Hilfsklassen umfaßt zur Bildung von Registrierungsobjekten (TCollaboratingTaskRegistry) und Aufgabenobjekten (TTaskRepresentation), die eine Kommunikation der Anforderungen zwischen Aufgaben durchführen.

3. Das Verfahren nach Anspruch 1, worin der Schritt der Übersetzung der plattform-unabhängigen objektorientierten Funktionsaufrufe in plattform-spezifische Funktionsaufrufe (212) die Schritte der Erzeugung von Hilfsklassen (2100), die Erweiterungsdienste bereitstellen, und der Verwendung der Hilfsklassen umfaßt zur Bildung von Anschlußobjekten (TAIXSocket, TAIXSocketSet), die eine Interprozeß-Kommunikation zur Verbindung der Anschlüsse bereitstellen.

4. Das Verfahren nach Anspruch 1, worin der Schritt der Übersetzung der plattform-unabhängigen objektorientierten Funktionsaufrufe in plattform-spezifische Funktionsaufrufe (212) die Schritte der Erzeugung von Hilfsklassen (2100), die Erweiterungsdienste bereitstellen, und der Verwendung der Hilfsklassen umfaßt zur Bildung von Aufgaben-ID-Objekten (TTaskID), die eine eindeutige globale Identifikation gestatten.

5. Das Verfahren nach Anspruch 1, worin der Schritt der Übersetzung der plattform-unabhängigen objektorientierten Funktionsaufrufe in plattform-spezifische Funktionsaufrufe (212) die Schritte der Erzeugung von Hilfsklassen (1900), die Erweiterungsdienste bereitstellen, und der Verwendung der Hilfsklassen umfaßt zur Bildung von Kontrollfluß-Vereinigungs-Objekten (TThreadPool), die eine Kontrollfluß-Vereinigung zur Zuordnung zu einer Aufgabe vorsehen.

6. Einrichtung zur Befähigung eines objektorientierten Anwendungsprogramms, das auf einer Computerplattform (102) ausgeführt wird, zum Zugriff auf ein plattformspezifisches Betriebssystem (114) während der Laufzeit zur Anforderung eines Systemservices, die Einrichtung enthält einen Mechanismus zum Ermitteln einer plattform-unabhängigen objektorientierte Anweisung in dem objektorientierten Anwendungsprogramm, die einen Systemservice (206) anfordert, Mittel zum Übersetzen der plattform-unabhängigen objektorientierten Anweisung in Befehle, die erforderlich sind zum Zugriff auf ein Servic-Programm, das durch das Betriebssystem verfügbar gemacht wird und das den Systemservice bereitstellt und die Befehle ausführt (112, 114),
dadurch gekennzeichnet,
daß die Übersetzungsmittel Mittel enthalten zum Übersetzen der plattform-unabhängigen abstrakten objektorientierten Anweisungen, die einen generischen Service unabhängig vom plattform-spezifischen Betriebssystem (KSAPI 128) definieren, Mittel enthalten zum Übersetzen der plattform-unabhängigen abstrakten objektorientierten Anweisungen in einen oder mehrere plattform-unabhängige objektorientierte Funktionsaufrufe, die spezifisch zu dem angeforderten Betriebssystem-Service (ASE 101) sind, und Mittel enthalten zum Übersetzen der plattform-unabhängigen objektorientierte Funktionsaufrufe in plattform-spezifische Funktionsaufrufe, die mit dem Betriebssystem kompatibel sind (PSIC 103) sind.

7. Die Einrichtung nach Anspruch 6, worin die Mittel zum Übersetzen der plattform-unabhängigen objektorientierten Funktionsaufrufe in plattform-spezifische Funktionsaufrufe (PSIC 103) Hilfsklassen-Code (2100) enthalten, der Erweiterungsdienste bereitstellt, und Mittel enthalten zur Benutzung des Hilfsklassen-Codes zur Bildung von Registrierungsobjekten (TCollaboratingTaskRegistry) und von Aufgabenobjekten (TTaskRepresentation), die eine Kommunikation der Anforderungen zwischen Aufgaben durchführen.

8. Die Einrichtung nach Anspruch 6, worin die Mittel zum Übersetzen der plattform-unabhängigen objektorientierten Funktionsaufrufe in plattform-spezifische Funktionsaufrufe (PSIC 103) Hilfsklassen-Code (2100) enthalten, der Erweiterungsdienste bereitstellt, und Mittel enthalten zur Benutzung des Hilfsklassen-Codes zur Bildung von Anschlußobjekten (TAIXSocket, TAIXSocketSet), die eine Interprozeß-Kommunikation zur Verbindung der Anschlüsse bereitstellen.

9. Die Einrichtung nach Anspruch 6, worin die Mittel zum Übersetzen der plattform-unabhängigen objektorientierten Funktionsaufrufe in plattform-spezifische Funktionsaufrufe (PSIC 103) Hilfsklassen-Code (2100) enthalten, der Erweiterungsdienste bereitstellt, und Mittel enthalten zur Benutzung des Hilfsklassen-Codes zur Bildung von Aufgaben-ID-Objekten (TTaskID), die eine eindeutige globale Identifikation gestatten.

10. Die Einrichtung nach Anspruch 6, worin die Mittel zum Übersetzen der plattform-unabhängigen objektorientierten Funktionsaufrufe in plattform-spezifische Funktionsaufrufe (PSIC 103) Hilfsklassen-Code (2100) enthalten, der Erweiterungsdienste bereitstellt, und Mittel enthalten zur Benutzung des Hilfsklassen-Codes zur Bildung von Kontrollfluß-Vereinigungs-Objekten (TThreadPool), die eine Kontrollfluß-Vereinigung zur Zuordnung zu einer Aufgabe vorsehen.

## Revendications

1. Méthode pour permettre à un programme d'application orienté objet s'exécutant sur une plate-forme d'ordinateurs (102) d'accéder à un système d'exploitation spécifique (114) durant le temps d'exécution pour requérir de services de système, la méthode localisant dans le programme d'application une instruction orientée objet indépendante de la plate-forme qui fait une requête de service de système (206), traduisant l'instruction orientée objet indépendante de la plate-forme en commandes qui sont nécessaires pour accéder à un programme de service fourni par le système d'exploitation fournissant le service de système et exécutant les commandes (214),
caractérisée en ce que
l'instruction orientée objet indépendante de la plate-forme est d'abord traduite en instructions orientées objet d'abrégé indépendante de la plate-forme définissant un service générique indépendant du système d'exploitation spécifique (208), les instructions orientées objet d'abrégé indépendantes de la plate-forme sont ensuite traduites en un ou plusieurs appels de fonctions orientées objet indépendantes de la plate-forme spécifiques au service du système d'exploitation demandé (210), les appels de fonctions orientées objet indépendantes de la plate-forme sont traduites en appels de fonctions spécifiques à la plate-forme compatible avec le système d'exploitation (212) et les appels de fonctions spécifiques à la plate-forme sont exécutés pour fournir le service demandé (214).

2. Méthode telle que définie dans la revendication 1, dans laquelle l'étape de traduire les appels de fonctions orientées objet indépendantes de la plate-forme en appels de fonctions spécifiques à la plate-forme (212) comprend les étapes de créer des classes d'utilité (2100) qui fournissent des services d'extension et créer les classes d'utilité pour construire des objets registres (TCollaboratingTasksRegistry) et des objets de tâches (TTaskRepresentation) qui communiquent des requêtes antre les tâches.

3. Méthode telle que définie dans la revendication 1, dans laquelle l'étape de traduire les appels de fonctions orientées objet indépendantes de la plate-forme en appels de fonctions spécifiques à la plate-forme (212) comprend les étapes de créer des classes d'utilité (2100) qui fournissent des services d'extension et utiliser les classes d'utilité pour construire des objets supports (TAIXSocket, TAIXSockeSet) fournissant une communication interprocédé pour connexion des supports.

4. Méthode telle que définie dans la revendication 1, dans laquelle l'étape de traduire les appels de fonctions orientées objet indépendantes de la plate-forme en appels de fonctions spécifiques à la plate-forme (212) comprend les étapes de créer des classes d'utilité (2100) qui fournissent des services d'extension et utiliser les classes d'utilité pour construire des objets ID de tâche (TTaskID) fournissant un identificateur global unique.

5. Méthode telle que définie dans la revendication 1, dans laquelle l'étape de traduire les appels de fonctions orientées objet indépendantes de la plate-forme en appels de fonctions spécifiques à la plate-forme (210) comprend les étapes de créer des classes d'utilité (1900) qui fournissent des services d'extension et utiliser les classes d'utilité pour construire des objets de groupes de cheminement (TThreadPool) fournissant un groupe de cheminement pour affectation à une tâche.

6. Appareil permettant à un programme d'application orienté objet s'exécutant sur une plate-forme d'ordinateurs (102) d'accéder à un système d'exploitation spécifique (114) durant le temps d'exécution pour requérir de services de système, l'appareil comprenant un mécanisme pour localiser dans le programme d'application une instruction orientée objet indépendante de la plate-forme qui fait une requête de service de système, des moyens pour traduire l'instruction orientée objet indépendante de la plate-forme en commandes qui sont nécessaires pour accéder à un programme de service fourni par le système d'exploitation fournissant le service de système et des moyens pour exécuter les commandes (112, 114),
caractérisé en ce que
les moyens de traduction comprennent des moyens pour traduire les instructions orientées objet d'abrégé indépendante de la plate-forme définissant un service générique indépendant du système d'exploitation spécifique (KSAPI 128), des moyens pour traduire les instructions orientées objet d'abrégé indépendantes de la plate-forme en un ou plusieurs appels de fonctions orientées objet indépendantes de la plate-forme spécifiques au service du système d'exploitation demandé (ASE 101), et des moyens pour traduire les appels de fonctions orientées objet indépendantes de la plate-forme en appels de fonctions spécifiques à la plate-forme compatible avec le système d'exploitation (PSIC 103).

7. Appareil tel que défini dans la revendication 6, dans lequel les moyens pour traduire les appels de fonctions orientées objet indépendantes de la plate-forme en appels de fonctions spécifiques à la plate-forme (PSIC 103) comprennent du code de classes d'utilité (2100) qui fournit des services d'extension et des moyens pour utiliser le code de classes d'utilité pour construire des objets registres (TCollaboratingTasksRegistry) et des objets de tâches (TTaskRepresentation) qui communiquent des requêtes antre les tâches.

8. Appareil tel que défini dans la revendication 6, dans lequel les moyens pour traduire les appels de fonctions orientées objet indépendantes de la plate-forme en appels de fonctions spécifiques à la plate-forme (PSIC 103) comprennent do code de classes d'utilité (2100) qui fournit des services d'extension et des moyens pour utiliser le code de classes d'utilité pour construire des objets supports (TAIXSocket, TAIXSockeSet) fournissant une communication interprocédé pour connexion des supports.

9. Appareil tel que défini dans la revendication 6, dans lequel les moyens pour traduire les appels de fonctions orientées objet indépendantes de la plate-forme en appels de fonctions spécifiques à la plate-forme (PSIC 103) comprennent du code de classes d'utilité (2100) qui fournit des services d'extension et des moyens pour utiliser le code de classes d'utilité pour construire des objets ID de tâche (TTaskID) fournissant un identificateur global unique.

10. Appareil tel que défini dans la revendication 6, dans lequel les moyens pour traduire les appels de fonctions orientées objet indépendantes de la plate-forme en appels de fonctions spécifiques à la plate-forme (PSIC 103) comprennent du code de classes d'utilité (2100) qui fournit des services d'extension et des moyens pour utiliser le code de classes d'utilité et des moyens pour utiliser le code de classes d'utilité pour construire des objets de groupes de cheminement (TThreadPool) fournissant un groupe de cheminement pour affectation à une tâche.
